(19) Europäisches Patentamt / European Patent Office / Office européen des brevets

(11) **EP 3 785 083 B1**

(12) **FASCICULE DE BREVET EUROPEEN**

(45) Date de publication et mention de la délivrance du brevet:
**02.08.2023 Bulletin 2023/31**

(21) Numéro de dépôt: **19712572.7**

(22) Date de dépôt: **20.03.2019**

(51) Classification Internationale des Brevets (IPC):
**G03H 1/08** *(2006.01)*      **G03H 1/22** *(2006.01)*

(52) Classification Coopérative des Brevets (CPC):
**G03H 1/0808;** G03H 1/2294; G03H 2001/0825;
G03H 2001/2207; G03H 2001/221;
G03H 2001/2284

(86) Numéro de dépôt international:
**PCT/EP2019/056994**

(87) Numéro de publication internationale:
**WO 2019/206528 (31.10.2019 Gazette 2019/44)**

(54) **PROCEDE DE TRAITEMENT D'UN HOLOGRAMME, DISPOSITIF, SYSTEME DE RESTITUTION HOLOGRAPHIQUE ET PROGRAMME D'ORDINATEUR ASSOCIES**

VERFAHREN ZUR VERARBEITUNG EINES HOLOGRAMMS, ZUGEHÖRIGE VORRICHTUNG, HOLOGRAFISCHES ANZEIGESYSTEM UND COMPUTERPROGRAMM

METHOD FOR PROCESSING A HOLOGRAM, AND ASSOCIATED DEVICE, HOLOGRAPHIC DISPLAY SYSTEM AND COMPUTER PROGRAM

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **23.04.2018 FR 1853536**

(43) Date de publication de la demande:
**03.03.2021 Bulletin 2021/09**

(73) Titulaire: **Fondation B-COM**
**35510 Cesson-Sévigné (FR)**

(72) Inventeurs:
• **GIOIA, Patrick**
**35530 SERVON-SUR-VILAINE (FR)**
• **GILLES, Antonin**
**35000 RENNES (FR)**

(74) Mandataire: **Jacobacci Coralis Harle**
**32, rue de l'Arcade**
**75008 Paris (FR)**

(56) Documents cités:
**US-A1- 2010 165 429**

• **D. P Kelly ET AL: "Quantifying the 2.5D imaging performance of digital holographic systems", Journal of the European Optical Society: Rapid Publications, 14 juin 2011 (2011-06-14), page 11034, XP055542546, DOI: 10.2971/jeos.2011.11034 Extrait de l'Internet: URL:https://epo.summon.serialssolutions.com/2.0.0/link/0/eLvHCXMwrV1LSwMxEA4tRfDiowr**
**WB-Tgwcu2u8nG7BZEpNoqeFHqwdOSTSZa0bZQxb_vz**
**D5sPYgXYY-zlXxJZiZh5vsYO1YgPFGdBcpLH2AlQD8**
**IsQs8bo4ltMAkmnqHHwfxeKTvR_Ftg9m6F4bKKkk3y**
**uCB70LNJdSbL9-wzitlb9yZQ288zz49FWb1-yGk2hm**
**Fc8pNFPsYnLOREZENHQjpZZO1MD4VaqsR-uAAN6ssy X5EqqPeC8w [extrait le 2019-01-15]**
• **TSUBASA ICHIKAWA ET AL: "CGH calculation with the ray tracing method for the Fourier transform optical system", OPTICS EXPRESS, vol. 21, no. 26, 17 décembre 2013 (2013-12-17), page 32019, XP055542132, DOI: 10.1364/OE.21.032019**

**Description**

## 1. Domaine de l'invention

Le domaine de l'invention est celui de l'holographie numérique, en particulier de l'adaptation d'un hologramme préexistant en vue de le rendre affichable par un système de restitution holographique particulier.

L'invention peut notamment, mais non exclusivement, s'appliquer aux usages de la réalité virtuelle ou augmentée, pour restituer l'hologramme d'entrée sur un visiocasque et éventuellement le superposer à une scène virtuelle que l'utilisateur perçoit à travers un écran transparent de son visiocasque HMD (pour « Head-Mounted-Display », en anglais).

## 2. Présentation de l'art antérieur

Aujourd'hui, avec l'apparition de banques d'hologrammes, on peut obtenir des hologrammes numériques de résolution et dimensions variées.

L'homme de métier sait restituer un hologramme préexistant sur un dispositif de type écran holographique pourvu que l'hologramme en question présente la même résolution et les mêmes dimensions que l'écran Une telle problématique est notamment abordée dans US 2010/165429 A1.

En revanche, si l'hologramme d'entrée présente des résolutions et dimensions différentes de l'écran holographique du système de restitution ou bien si le système de restitution qui intègre l'écran holographique comprend des éléments optiques agencés entre le plan de l'écran holographique et un plan de visualisation de l'hologramme, alors l'hologramme risque d'apparaître très déformé ou inexploitable.

On connait par ailleurs du document de J. J. Healy et al.,intitulé « Linear Canonical Transforms - Theory and Applications",édité par New York: Springer-Verlag, première édition, en 2016. pp. 347-366, une méthode de génération optique d'un hologramme sur capteur à transfert de charge ou CCD (pour « Charge Coupled Device », en anglais), selon laquelle on fait interférer classiquement un faisceau de référence et un faisceau objet, résultat de la réflexion du faisceau de référence sur les objets de la scène, sur une surface constituée d'un ensemble de pixels.

La propagation du faisceau objet jusqu'au capteur CCD se fait à travers un agencement de plusieurs éléments optiques (lentilles, séparateurs de faisceaux, etc).

Cette méthode cherche à optimiser les paramètres du système optique en simulant la propagation de champ lumineux à travers les éléments optiques qui le constituent. De la sorte, les paramètres du système optique sont ajustés pour obtenir un champ lumineux ayant les caractéristiques souhaitées.

Elle s'appuie sur une théorie dite des Transformations Linéaires Canoniques ou LCT (pour « Linear Canonical Transforms », en anglais), par exemple décrite dans le document de Healy et al. déjà cité, pages 39-80. Cette théorie fait le lien entre deux types de transformations mathématiques, qui sont :

- Les matrices de transfert de rayons, transformations linéaires traduisant le changement d'orientation des rayons induit par la traversée d'un élément optique. Elles intègrent les paramètres de l'élément optique. Si chaque rayon est représenté par des paramètres spatiaux et angulaires, la matrice de transfert d'un élément optique est la transformation linéaire de ces paramètres qui à chaque rayon d'entrée fait correspondre le rayon de sortie. Les matrices de transfert des éléments optiques classiques sont connues de l'homme du métier. On peut citer par exemple :

  ∘ Une propagation libre, dans le vide ou dans l'air, sur une distance d : $Mv = \begin{pmatrix} I & \lambda dI \\ 0 & I \end{pmatrix}$,

  ∘ Une lentille mince de focale f : $Ml = \begin{pmatrix} I & 0 \\ -I/\lambda f & I \end{pmatrix}$, où $I$ représente la matrice identité $\begin{pmatrix} 1 & 0 \\ 0 & 1 \end{pmatrix}$.

- Les opérateur intégraux :

A chaque matrice de transfert $M = \begin{pmatrix} A & B \\ C & D \end{pmatrix}$ on fait correspondre un opérateur intégral $\tau$ qui à une fonction f représentant un champ associe une fonction f' telle que :

$$f' = T(f) \qquad (1)$$

f' étant définie par

$$f'(X') = \det(iB)^{-1/2} \int f(X) e^{i\pi P(X,X')} dX, \qquad (2)$$

avec

$$P(X,X') = B^{-1}AX + D B^{-1}X' - 2X^t B^{-1}X', \qquad (3)$$

*X* et *X'* étant des vecteurs réels à deux composantes et *A*, *B*, *C* et *D* des matrices 2x2.

Selon cette théorie, l'opérateur obtenu réalise la transformation opérée sur le champ lumineux par l'élément optique en question.

Ainsi, une cascade d'éléments optiques peut être représentée par une matrice de transfert de rayons globale, produit des matrices de transfert de rayons des éléments optiques traversés successivement. La matrice résultante globale obtenue peut s'interpréter comme une transformation de la distribution espace / fréquence du faisceau lumineux.

Selon cette théorie, la matrice de transfert global peut être associée à un opérateur intégral unique, qui décrit la propagation d'un champ lumineux à travers la totalité du système optique.

### 3. Inconvénients de l'art antérieur

L'art antérieur ne propose pas de solution pour adapter un hologramme existant à un système de restitution holographique.

Il existe donc un besoin d'une solution d'adaptation d'un hologramme numérique préexistant à un système de restitution holographique particulier, qui soit simple, ne déforme pas l'hologramme visualisé par l'utilisateur par rapport à l'hologramme existant, et exploitable dans des systèmes de restitution portables, type HMD.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution d'adaptation d'un hologramme préexistant à un dispositif de restitution particulier, qui soit simple et ne déforme pas l'hologramme.

Un autre objectif de l'invention est de proposer une solution qui puisse être embarquée dans un système de restitution portable par l'utilisateur, tel qu'un visiocasque et qui s'adapte en temps réel à un déplacement de l'utilisateur.

### 5. Exposé de l'invention

Ces objectifs, ainsi que d'autres qui apparaîtront par la suite, sont atteints à l'aide d'un procédé de traitement d'au moins un hologramme d'entrée associé à au moins un plan d'entrée dans un référentiel monde, en vue d'obtenir un hologramme de sortie affichable sur un écran holographique placé dans un plan dit de sortie d'un système de restitution et visualisable par un observateur depuis un plan de visualisation dudit système, ledit système comprenant au moins un élément optique agencé entre le plan de visualisation (PV) et le plan de sortie.

Un tel procédé est particulier en ce qu'il comprend les étapes suivantes :

- Obtention de l'hologramme d'entrée et d'une pose du plan d'entrée associé dans le référentiel monde ;

- Obtention d'au moins une première matrice de transfert de rayons, dite matrice extrinsèque, représentative d'une propagation en espace libre entre le plan d'entrée et le plan de visualisation du système de restitution;

- Obtention d'au moins une deuxième matrice de transfert de rayons, dite matrice intrinsèque, représentative d'une propagation entre le plan de visualisation et le plan de sortie du système de restitution à travers au moins undit élément optique ;

- Calcul d'au moins une matrice globale de transfert de rayons d'un champ lumineux émis par l'hologramme d'entrée entre le plan d'entrée et le plan de sortie du système de restitution, par produit d'au moins deux desdites matrices ;et

- Transformation d'un champ lumineux de l'hologramme d'entrée en un champ lumineux de l'hologramme de sortie par application d'au moins un opérateur intégral linéaire déterminé à partir de la au moins une matrice globale calculée, en fonction de dimensions d'entrée et de résolutions d'entrée de l'hologramme d'entrée et de dimensions de sortie et de résolutions de sortie de l'écran holographique.

L'invention propose ainsi une approche tout à fait nouvelle et inventive qui permet d'adapter de façon simple un hologramme préexistant à un système de restitution particulier, de telle sorte que l'hologramme de sortie affiché sur l'écran holographique de ce système restitue à un observateur la même vue de la scène 3D reconstruite que celle de l'hologramme d'entrée dans le plan d'entrée.

L'invention exploite les propriétés de la théorie des transformations canoniques linéaires pour expliciter de façon peu complexe, sous forme de matrices de transfert de rayons 4x4 la distorsion subie par un champ lumineux émis par un hologramme d'entrée quelconque lors de sa propagation inverse du plan d'entrée vers le plan de visualisation d'une part et d'autre part du plan de visualisation au plan de sortie, à travers la succession d'éléments optiques constitutive du système de restitution holographique. La compensation de cette distorsion est exprimée sous la forme d'un ou plusieurs opérateurs intégraux linéaires de transformation applicable(s) à tout hologramme d'entrée.

Le ou les opérateurs intégraux linéaires prennent en compte les résolutions et les dimensions de l'hologramme d'entrée pour le transformer en un hologramme de sortie dont les résolutions et les dimensions correspondent à celles de l'écran holographique. De cette manière, l'invention permet de rendre affichable par le système de restitution holographique n'importe quel hologramme d'entrée.

Du fait de sa simplicité, l'invention est bien adaptée à des applications temps réel.

Selon un aspect de l'invention, lorsque le système de restitution holographique comprend un module de traitement non linéaire du champ lumineux de l'hologramme d'entrée, l'étape d'obtention d'au moins une matrice intrinsèque comprend l'obtention d'une première matrice représentative d'une propagation du champ lumineux à travers au moins un élément optique linéaire situé en amont du module de traitement non linéaire et l'obtention d'une deuxième matrice intrinsèque représentative d'une propagation du champ lumineux traité à travers au moins un élément optique linéaire situé en aval du module de filtrage, l'étape de calcul d'au moins une matrice globale comprend le calcul d'une première matrice globale par produit de la au moins une matrice extrinsèque et de la première matrice intrinsèque et d'une deuxième matrice globale à partir de la deuxième matrice intrinsèque, l'étape de transformation du champ lumineux de l'hologramme d'entrée comprend l'application successive d'un premier opérateur linéaire intégral à partir de la première matrice globale, d'un opérateur du traitement non linéaire et d'un deuxième opérateur linéaire intégral à partir de la deuxième matrice globale ($M_A$).

Un avantage est de prendre en compte un traitement non linéaire sur le champ lumineux intégré au système de restitution, comme par exemple un filtrage, tout en proposant une compensation simple, par un nombre minimal d'opérateurs linéaires intégraux, des distorsions linéaires subies par l'hologramme d'entrée.

Selon un autre aspect de l'invention, le procédé comprend une étape d'obtention d'une pose de l'observateur dans le référentiel Monde, une étape d'évaluation d'une visibilité du au moins un hologramme d'entrée par l'observateur, et, les étapes d'obtention de matrices de transfert de rayons et de transformation de l'hologramme d'entrée sont mises en oeuvre, lorsque le au moins un hologramme d'entrée est évalué comme visible par l'observateur.

Un avantage est que l'hologramme de sortie n'est recalculé que lorsque c'est nécessaire.

Selon encore un autre aspect de l'invention, suite à une détection de changement de pose de l'observateur dans le repère monde, le procédé met à jour au moins une matrice extrinsèque et la au moins une matrice globale de transformation en fonction dudit changement, transforme l'hologramme d'entrée par application d'au moins un opérateur intégral linéaire déterminé à partir de la au moins une matrice globale de transfert de rayons mise à jour.

Un avantage est que, seule la matrice extrinsèque est impactée par le déplacement du système de restitution et que la mise à jour de l'opérateur global de transformation est peu complexe et réalisable en temps réel. L'invention est donc bien adaptée à un système de restitution mobile, par exemple porté par un utilisateur en mouvement.

Selon encore un autre aspect de l'invention, lorsque le plan de sortie du système de restitution n'est pas parallèle au plan d'entrée de l'hologramme d'entrée, le procédé comprend une étape d'obtention d'une matrice de rotation du champ lumineux entre le plan d'entrée et un plan redressé, parallèle au plan de visualisation, une étape de détermination d'un opérateur non linéaire de transformation du champ lumineux par composition d'une transformée de Fourier , d'un opérateur fréquentiel de rotation à partir de ladite matrice de rotation et d'une transformée de Fourier inverse et l'étape de transformation comprend en outre l'application dudit opérateur non linéaire préalablement audit au moins un opérateur linéaire intégral.

Un avantage est de permettre à l'utilisateur de se placer à la position/orientation de son choix par rapport au plan de référence de l'hologramme d'entrée.

Selon encore un autre aspect de l'invention, l'étape de calcul d'une première matrice globale réalise le produit de la transformée de Fourier inverse, de la matrice extrinsèque et de la première matrice intrinsèque.

Un avantage est de regrouper toutes les opérations linéaires consécutivement appliquées au champ lumineux en un seul opérateur précalculé.

Selon encore un autre aspect de l'invention, le champ lumineux de l'hologramme d'entrée comprenant une pluralité d'échantillons fonction des dimensions d'entrée et de résolutions d'entrée, l'étape de transformation du champ lumineux de l'hologramme d'entrée par au moins un opérateur linéaire comprend l'application auxdits échantillons d'une transformée de Fourier discrète et le champ lumineux transformé est échantillonné en fonction des résolutions de sortie et les dimensions de sortie de l'hologramme de sortie.

Un premier avantage est l'adaptation du champ lumineux d'entrée aux dimensions et résolution du plan de sortie, ce qui garantit à l'observateur de voir l'intégralité de la scène reconstruite par l'hologramme d'entrée. Un deuxième avantage est qu'en regroupant les transformations à appliquer à l'hologramme d'entrée en un nombre minimal d'opérateurs linéaires intégraux, on réduit de fait le nombre de transformées de Fourier à calculer et donc la complexité globale du traitement.

Selon encore un autre aspect de l'invention, lorsque une pluralité d'hologrammes d'entrée est associée à une pluralité de plans d'entrée formant les faces d'un solide géométrique, le procédé comprend une étape de sélection des plans d'entrée correspondant à des faces visibles depuis le plan de sortie, les étapes d'obtention d'au moins une matrice extrinsèque, l'étape de calcul d'au moins une matrice global de transfert de rayons, et l'étape de transformation transforme les hologrammes d'entrée des plans d'entrée sélectionnés par application d'au moins un opérateur intégral linéaire déterminé à partir de la au moins une matrice globale calculée et fait une somme des champs transformés pour obtenir l'hologramme de sortie.

Un avantage est que lorsque plusieurs hologrammes d'entrée d'une même scène 3D sont disposés sur des faces d'un cube ou d'un autre solide géométrique, l'invention permet de ne transformer que les hologrammes d'entrée correspondant à des faces visibles depuis la position et l'orientation de l'observateur.

Selon encore un autre aspect de l'invention, la au moins une matrice extrinsèque obtenue et la au moins une matrice intrinsèque obtenue sont stockées en mémoire.

Un avantage est qu'ils peuvent être au moins en partie réutilisés pour un nouvel hologramme d'entrée ou pour une nouvelle pose de l'observateur. Si l'hologramme d'entrée présente des dimensions et résolutions différentes, le ou les opérateurs devront être mis à jour.

De façon correspondante, l'invention concerne également un dispositif adapté pour mettre en oeuvre le procédé de traitement d'au moins un hologramme d'entrée selon l'invention tel que défini ci-dessus. Ce dispositif pourra bien sûr comporter les différentes caractéristiques relatives au procédé selon l'invention. Ainsi, les caractéristiques et avantages de ce dispositif sont les mêmes que ceux du procédé de traitement, et ne sont pas détaillés plus amplement.

Selon un mode particulier de réalisation de l'invention, un tel dispositif est compris dans un système de restitution holographique comprenant un module d'obtention d'un hologramme d'entrée associé à un plan d'entrée dans un référentiel monde, un plan de sortie dans lequel est placé un écran holographique destiné à restituer un hologramme, dit hologramme de sortie, un plan de visualisation dans lequel l'hologramme de sortie est destiné à être visualisé par un utilisateur, et au moins un élément optique, placé entre le plan de visualisation et le plan de sortie.

Il s'agit par exemple d'un projecteur, qui est fixe et ne prend pas en compte la position de l'observateur.

Selon un aspect de l'invention, le système de restitution holographique est un visiocasque, destiné à être porté sur la tête d'un utilisateur, le plan de visualisation est placé devant les yeux de l'utilisateur, le plan de sortie est placé en dehors d'un cône de vision de l'utilisateur, et le système de restitution holographique comprend au moins les éléments optiques suivants :

- un module de réception d'un hologramme d'entrée comprenant des dimensions d'entrée et des résolutions d'entrée;

- un module d'obtention d'une pose de l'observateur dans un référentiel Monde;

- un écran holographique dans le plan de sortie, comprenant des dimensions de sortie et des résolutions de sortie;

- un système de filtrage optique, de type 4F comprenant un module de filtrage non linéaire et deux lentilles minces;

- une lentille de champ destinée à agrandir un champ de visualisation du champ lumineux perçu par l'observateur sur le plan de visualisation; et

- un séparateur de faisceaux destiné à réorienter le champ lumineux de l'hologramme dans la direction du plan de visualisation.

L'invention concerne aussi un programme d'ordinateur comportant des instructions pour la mise en oeuvre des étapes d'un procédé de traitement d'au moins un hologramme d'entrée tel que décrit précédemment, lorsque ce programme est exécuté par un processeur.

Ce programme peut utiliser n'importe quel langage de programmation. Il peut être téléchargé depuis un réseau de communication et/ou enregistré sur un support lisible par ordinateur.

L'invention se rapporte enfin à un support d'enregistrement, lisible par un processeur, intégré ou non au dispositif de traitement selon l'invention, éventuellement amovible, mémorisant un programme d'ordinateur mettant en oeuvre le procédé de traitement selon l'invention, tel que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** illustre de façon schématique le traitement d'un hologramme d'entrée réalisé par l'invention pour l'adapter à un système de restitution holographique;

- la figure **2A** décrit de façon schématique l'agencement d'un premier exemple de système de restitution holographique mettant en oeuvre l'invention ;

- la figure **2B** décrit de façon plus détaillée l'agencement des éléments optiques constitutifs de ce premier système de restitution holographique ;

- la figure **3** présente de façon schématique les étapes de traitement d'un hologramme d'entrée selon un premier mode de réalisation de l'invention ;

- la figure **4A** décrit de façon schématique l'agencement d'un deuxième exemple de système de restitution holographique mettant en oeuvre l'invention ;

- la figure **4B** décrit de façon plus détaillée l'agencement des éléments optiques constitutifs de ce deuxième système de restitution holographique ;

- la figure **5A** illustre de façon schématique le cône de visibilité d'un hologramme d'entrée ;

- la figure **5B** illustre de façon schématique le cône de vision d'un observateur à travers d'un système de restitution holographique ;

- la figure **6** illustre un exemple de restitution d'une scène 3D basée sur une pluralité d'hologrammes affichés sur les faces d'un cube, selon un troisième exemple de réalisation de l'invention ;

- la figure **7** décrit de façon schématique le procédé de traitement d'une pluralité d'hologrammes associés aux faces d'un solide géométrique selon ce troisième mode de réalisation de l'invention;

- la figure **8** illustre de façon schématique un premier exemple de structure matérielle d'un dispositif de traitement d'un hologramme d'entrée selon l'invention ; et

- la figure **9** illustre de façon schématique un deuxième exemple de structure matérielle d'un dispositif de traitement d'un hologramme d'entrée selon l'invention.

## 7. Description d'un mode de réalisation particulier de l'invention

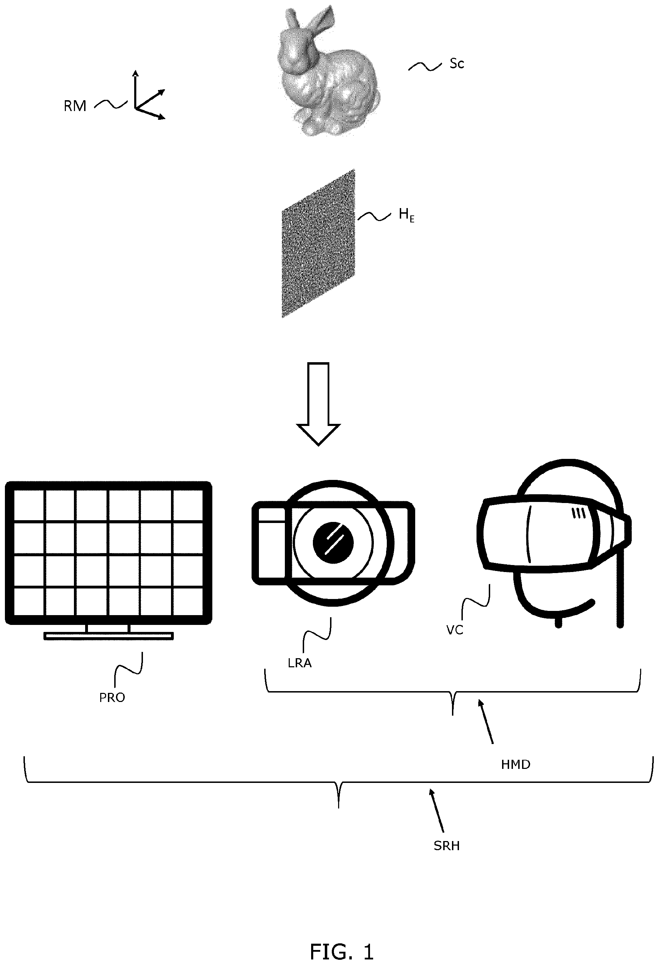

En relation avec la Figure **1,** on considère une scène 3D à partir de laquelle un hologramme d'entrée HE a été généré. Il est associé à un plan d'entrée PE, ou plan de l'hologramme d'entrée, dans lequel il est destiné à être affiché, avec des dimensions et une résolution données. En d'autres termes, les données d'entrée formant cet hologramme HE correspondent à une pluralité de valeurs discrètes ou échantillons d'un champ lumineux complexe dans un quadrilatère QE de ce plan, cette pluralité étant définie par les dimensions et résolution de l'hologramme d'entrée.

Ce plan d'entrée $P_E$ est associé à une pose, c'est-à-dire une position et une orientation connues dans un référentiel dit référentiel monde RM. Cette pose est généralement reçue avec l'hologramme d'entrée, lorsqu'il est par exemple issu d'une banque d'hologrammes et elle permet de restituer l'hologramme dans de bonnes conditions, c'est-à-dire de visualiser une scène reconstruite à la bonne échelle. Bien sûr, une autre pose du plan d'entrée PE peut être choisie par une application ou usage particulier(s), par exemple de réalité virtuelle ou augmentée ou encore de visioconférence, qui exploite cet hologramme d'entrée.

Par exemple, la pose du plan d'entrée peut être modifiée en fonction de celle d'un système de restitution holographique (SRH) de façon à ce que la face du quadrilatère $Q_E$ correspondant à la sortie du faisceau lumineux soit visible par ce dernier.

On a représenté trois exemples de systèmes de restitution holographiques SRH, qui sont un projecteur PRO, et des systèmes d'affichage portés sur soi ou HMD (pour « Head Mounted Display », en anglais), tels que des lunettes de réalité augmentée LRA ou un visiocasque de réalité virtuelle VC.

Le principe général de l'invention repose sur l'adaptation rapide d'un hologramme d'entrée $H_E$ en vue de sa restitution par un tel système holographique comprenant au moins un élément optique agencé entre le dispositif d'affichage de l'hologramme, appelé aussi écran holographique, de type modulateur spatial de lumière ou SLM (pour « Spatial Light Modulator », en anglais) et un plan de visualisation $P_V$ virtuel de ce dernier. Cette adaptation est obtenue en transformant le champ lumineux de l'hologramme d'entrée dans le plan d'entrée en un hologramme de sortie $H_S$ destiné à être affiché par le SLM, à l'aide d'un opérateur linéaire global, qui compense la traversée par son champ lumineux de l'agencement d'éléments optiques du système de restitution holographique.

Dans la suite, on désigne par scène reconstruite $SC_R$ l'image, formée par l'œil d'un observateur Ob, du champ lumineux qui traverse un quadrilatère $Q_V$ du plan de visualisation $P_V$. Ce champ lumineux est initialement formé sur le plan de sortie $P_S$ du SLM par le produit d'une onde monochromatique plane de longueur d'onde À avec la fonction complexe représentative de l'hologramme HS, dit de sortie, puis transformé par l'agencement d'éléments optiques qu'il traverse jusqu'au plan de visualisation PV. Cette fonction complexe est recalculée par le procédé de traitement selon l'invention de façon à compenser la transformation induite par la traversée de l'agencement d'éléments optiques constitutif du HMD qui vient d'être décrit. De la sorte, le champ lumineux qui traverse le plan de visualisation $P_V$ coïncide avec celui de l'hologramme d'entrée qui traverse le plan d'entrée.

Afin de procéder au calcul rapide de l'hologramme de sortie HS, l'invention réalise deux propagations :

- une propagation directe de l'hologramme original du plan d'entrée HE jusqu'au plan de visualisation $P_V$ ; puis

- une propagation, dite « inverse » du champ lumineux depuis le plan de visualisation PV jusqu'au plan de sortie PS.

Puis, pour modéliser ces deux propagations, l'invention s'appuie sur la théorie des Transformations Linéaires Canoniques ou LCT, précédemment évoquée. Selon cette théorie, on cherche à représenter une succession continue de transformations optiques linéaires due à la traversée d'éléments optiques par une matrice de transfert de rayons qu'elle associe ensuite à un opérateur de propagation lumineuse unique.

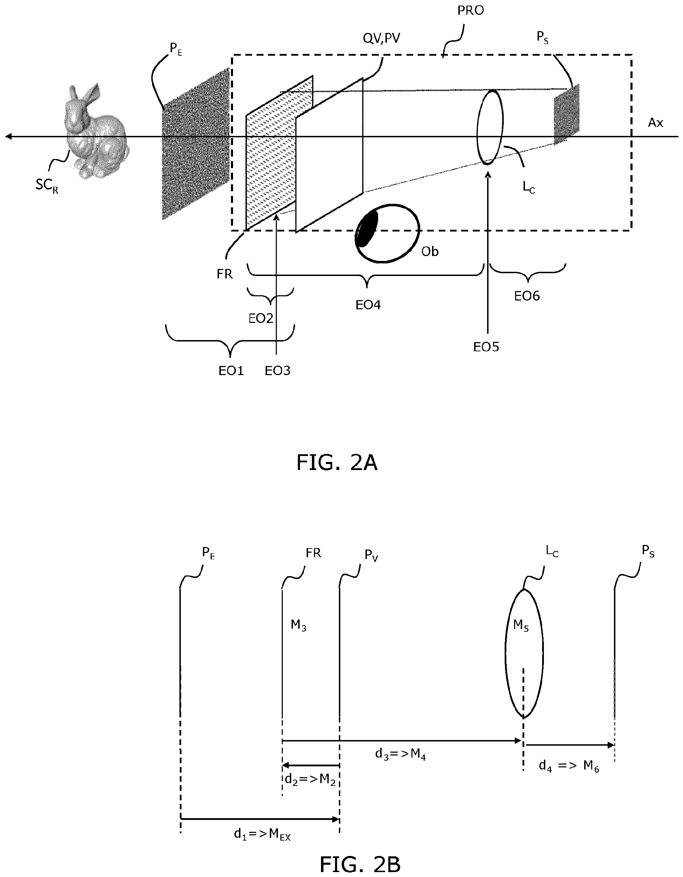

En relation avec les Figures **2A** et **2B**, on considère un premier exemple de réalisation de l'invention, lorsque le système de restitution holographique SRH est de type projecteur PRO. L'hologramme d'entrée $H_E$ est associé à un plan $P_E$, dit plan d'entrée et à un quadrilatère $Q_E$ dans le plan $P_E$. Ce plan est positionné dans le référentiel monde RM, de même que le système de restitution holographique SRH.

Le projecteur PRO est fixe et comprend les éléments suivants, agencés le long d'un axe Ax et parallèles au plan d'entrée :

- Des moyens (non représentés) de réception de l'hologramme d'entrée $H_E$. Par exemple, le système SRH comprend des moyens filaires ou non filaires de connexion à un réseau de télécommunications. L'hologramme d'entrée $H_E$ est associé à un plan d'entré $P_E$ dont la pose est supposée fixe dans le repère monde RM. Il est fourni sous forme discrétisée sur un quadrilatère $Q_E$ de dimensions $Sx_E$ et $Sy_E$ comportant $Nx_E$ x $Ny_E$ pixels, inscrit dans le plan d'entrée PE. A titre d'exemple, les hologrammes disponibles dans des banques de données accessibles publiquement sont de l'ordre de 8Kx4K pixels pour des dimensions $Sx_E$ et $Sy_E$ de l'ordre du cm. Les plus grands hologrammes disponibles peuvent avoisiner les 72Kx36K pixels pour des dimensions $Sx_E$ et $Sy_E$ de l'ordre d'une dizaine de cm;

- Un écran holographique de type SLM placé dans un plan $P_S$ dit plan de sortie ;

- Une lentille de champ $L_C$ de focale f destinée à agrandir l'angle de vue du champ lumineux émis par le SLM, située à une distance $d_4$ du plan PS. Typiquement, f et $d_4$ sont de l'ordre de 5 cm ;

- Un film réflectif FR placé à une distance $d_3$ de la lentille de champ dont l'objectif est de réfléchir l'image issue du projecteur holographique, comme le ferait un écran de cinéma. Typiquement, la distance $d_3$ est choisie égale à 3 mètres ;

- Un plan de visualisation virtuel $P_V$ placé à une distance $d_2$ devant le film réflectif. La distance $d_2$ correspond à une distance minimale de l'observateur par rapport au film réflectif. Typiquement, la distance $d_2$ est choisie égale à 50 centimètres. La distance entre le plan de visualisation PV et le plan d'entrée PE est donnée par $d_1$, de l'ordre de 50 centimètres.

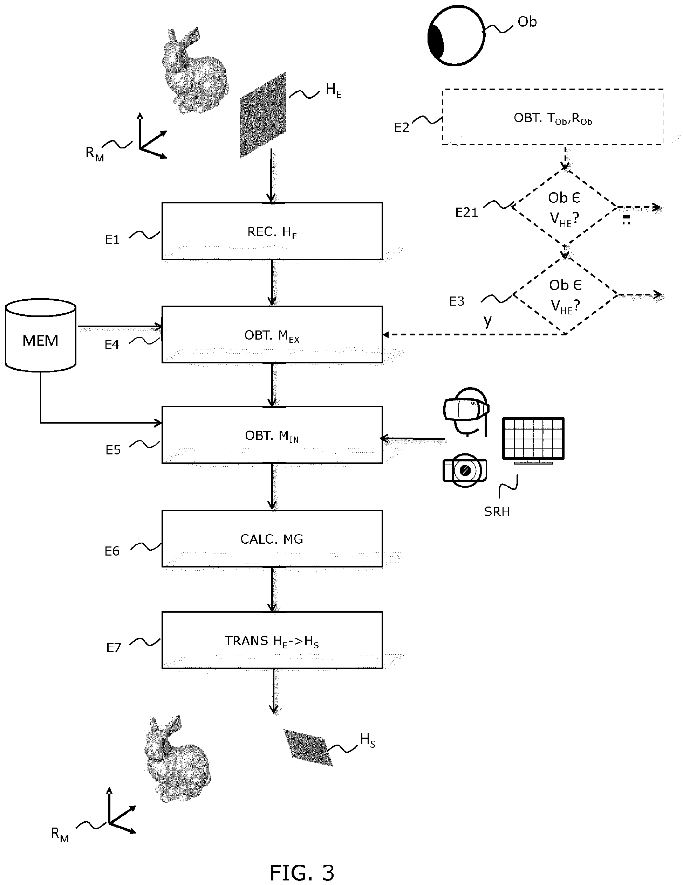

En relation avec la Figure **3,** on décrit maintenant les étapes d'un procédé de traitement d'un hologramme d'entrée $H_E$ selon ce premier mode de réalisation de l'invention. Au cours d'une étape E1, un hologramme d'entrée HE est reçu par le système de restitution holographique SRH.

A ce stade, on distingue les deux propagations successives suivantes :

- une première propagation, dite « directe extrinsèque », en espace libre du champ lumineux de l'hologramme d'entrée HE jusqu'au plan de visualisation du système de restitution SRH;

- une deuxième propagation, dite « inverse intrinsèque» du champ lumineux à travers l'agencement des éléments optiques constitutifs du SRH jusqu'au plan PS de l'écran holographique SLM.

En E4, une matrice de transfert de rayons extrinsèque $M_{EX}$ relative à la première propagation est obtenue. Elle n'est pas spécifique à l'hologramme d'entrée $H_E$. Elle peut donc avoir été calculée dans une phase préalable puis stockée dans une mémoire locale MEM. Dans l'exemple du projecteur PRO, elle consiste en une propagation en espace libre de distance $d_1$ entre le plan d'entrée $P_E$ et le plan de visualisation $P_V$ du projecteur.

Elle s'exprime donc simplement sous la forme :

$$M_{EX} = \begin{pmatrix} I & \lambda d_1 I \\ 0 & I \end{pmatrix}$$

avec I matrice identité.

En E5, on obtient au moins une matrice de transfert de rayons intrinsèque $M_{IN}$ relative à la propagation inverse intrinsèque du champ lumineux de l'hologramme $H_E$, à l'intérieur du SRH, comme un produit des matrices de transfert de rayons des éléments optiques qui le constituent :

$$M_{IN} = M_6.M_5.M_4.M_3.M_2,$$

Avec :

- $M_2 = \begin{pmatrix} I & \lambda d_2 I \\ 0 & I \end{pmatrix}$ pour la propagation en espace libre de distance $d_2$ entre le plan de visualisation PV et le film réflectif FR ;

- $M_3 = \begin{pmatrix} I & 0 \\ 0 & -I \end{pmatrix}$ pour la réflexion des rayons par le film réflectif FR

- $M_4 = \begin{pmatrix} I & \lambda d_3 I \\ 0 & I \end{pmatrix}$ pour la propagation en espace libre de distance $d_3$ entre le film réflectif FR et la lentille de champ LC

- $M_5 = \begin{pmatrix} I & 0 \\ -I/\lambda f & I \end{pmatrix}$ pour la propagation du champ lumineux de l'hologramme HE à travers la lentille de champ LC ; et

- $M_6 = \begin{pmatrix} I & \lambda d_4 I \\ 0 & I \end{pmatrix}$ pour la propagation en espace libre de distance $d_4$ entre la lentille de champ $L_C$ et le plan de sortie $P_S$. On notera qu'une telle matrice de transfert de rayons permet de modéliser une propagation dite linéaire, au sens où l'expression des rayons en sortie de l'élément optique est linéaire en fonction de l'expression des rayons d'entrée, ces rayons étant exprimés par un point de l'espace, respectivement d'entrée et de sortie, et des angles, respectivement d'entrée et de sortie.

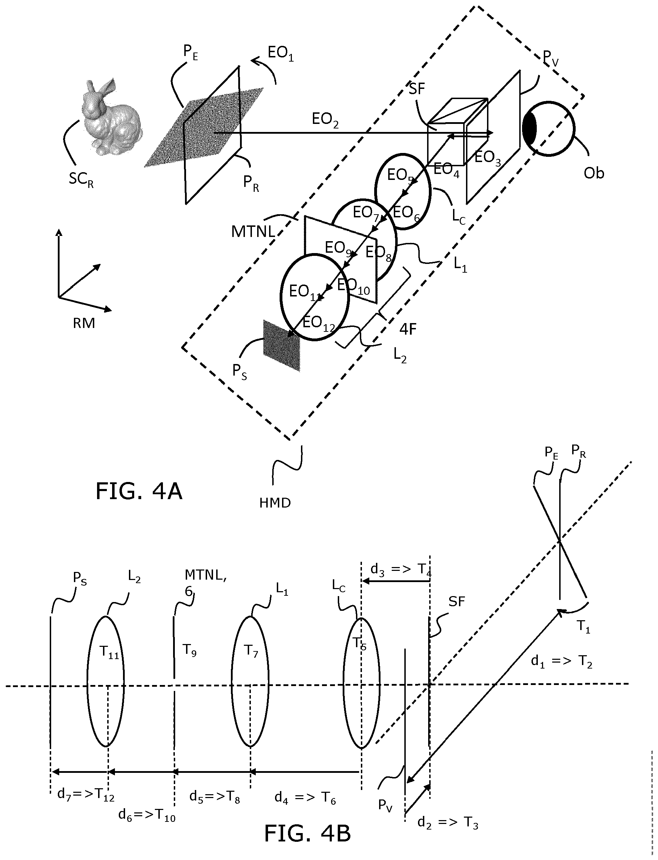

Dans le cas où le système SRH comprendrait un module de traitement non linéaire intercalé entre deux éléments optiques linéaires, non seulement il faudrait modéliser l'effet de ce traitement non linéaire sur le champ lumineux à l'aide d'un opérateur général de transformation du champ lumineux, mais encore il serait nécessaire de déterminer une première matrice de transfert de rayons pour modéliser l'effet des éléments optiques situés en amont du module de traitement non linéaire sur le champ lumineux de l'hologramme, et une deuxième matrice de transfert de rayons pour modéliser celui des éléments optiques situés en aval du module de traitement non linéaire. Un exemple sera décrit plus en détails en relation avec les Figures **4A** et **4B**.

On suppose ici que le système de restitution holographique PRO ne comprend pas de module de traitement non linéaire. On obtient donc une seule matrice de transfert de rayons intrinsèque $M_{IN}$.

En E6, on calcule une matrice M$_G$ globale de transfert de rayons d'un champ lumineux émis par l'hologramme d'entrée H$_E$ dans le plan d'entrée P$_E$ jusqu'au plan de sortie P$_S$ du système de restitution SRH, par produit de la matrice de transfert de rayons extrinsèque M$_{EX}$ et la matrice de rayons intrinsèque M$_{IN}$.

On a :

$$M_G = M_{EX}.M_{IN}$$

En E7, on transforme l'hologramme d'entrée H$_E$ par application d'un opérateur intégral de transformation T obtenu à partir de la matrice globale M$_G$ calculée, conformément aux équations (1) à (3) précédemment décrites. Cet opérateur T réalise la transformation du champ lumineux de l'hologramme d'entrée HE à travers l'agencement d'éléments optiques du SRH jusqu'au plan de sortie PS de l'écran holographique.

Ainsi, si la matrice globale M$_G$ vaut $\begin{pmatrix} A & B \\ C & D \end{pmatrix}$, avec *A*, B, *C* et *D* des matrices 2x2, on définit en théorie l'opérateur T comme l'opérateur qui transforme le champ *f* de l'hologramme d'entrée HE en le champ f de l'hologramme de sortie

$$f'(X') = T(f)(X') = \det(iB)^{-1/2} \int f(X) e^{i\pi P(X,X')} dX, \quad (2)$$

avec

$$P(X,X') = B^{-1}AX + D B^{-1}X' -2X^t B^{-1}X'. \quad (3)$$

Et X,X' les vecteurs de composantes spatiales des champs lumineux respectivement du plan d'entrée P$_E$ et du plan de sortie P$_S$.

En pratique, l'opérateur T est discrétisé en transformant les intégrales de l'équation (2) en sommes discrètes pour prendre en compte la résolution Nx$_E$,Ny$_E$ et les dimensions Sx$_E$,Sy$_E$ de l'hologramme d'entrée f, et le champ résultant f' est échantillonné suivant la résolution N$_{xS}$, N$_{yS}$ et les dimensions Sx$_S$,Sy$_S$ de l'hologramme de sortie H$_S$ de la façon suivante :

$$f'_{k,l} = \det(iB)^{-\frac{1}{2}} \sum_{i=1}^{NxE} \sum_{j=1}^{NyE} f_{i,j} e^{i\pi P\left(X_{i,j}, X'_{k,l}\right)} \Delta_X \quad (4)$$

Où k,l sont les indices de l'échantillon f'$_{k,l}$, qui correspond à la version discrétisée du champ lumineux f'transformé par l'opérateur linéaire T;

avec

$$f_{i,j} = f\left(X_{i,j}\right) \quad (5)$$

$$f'_{k,l} = f'\left(X'_{k,l}\right) \quad (6)$$

$$X_{i,j} = \begin{pmatrix} i\Delta_x \\ j\Delta_y \end{pmatrix} \quad (7)$$

$$X'_{k,l} = \begin{pmatrix} k\Delta'_x \\ j\Delta'_y \end{pmatrix} \quad (8)$$

$$\Delta'_x = \begin{pmatrix} k\Delta'_x \\ j\Delta'_y \end{pmatrix} \quad (9)$$

et

$$\Delta_X = \frac{S_x S_y}{NxE.NyE} \qquad (10)$$

Avantageusement, la fonction $f'_{k,l}$ est calculée selon une méthode connue qui consiste à en extraire une transformée de Fourier discrète :

$$f'_{k,l} = \det(iB)^{-\frac{1}{2}} e^{i\pi D B^{-1} X'_{k,l}} \Delta_X TFD_B(G)(X'_{k,l}) \qquad (11)$$

$TFD_B$ désigne la transformée de Fourier discrète échelonnée d'un facteur $B^{-1}$, G étant la fonction discrète suivante :

$$e^{i\pi B^{-1} A X_{i,j}} f_{i,j} \qquad (12)$$

On calcule donc un nombre d'échantillons f'k,l correspondant aux résolutions $N_{xS}$, $N_{yS}$ et dimensions $Sx_S$,$Sy_S$ de l'écran holographique SLM de sortie.

On obtient ainsi le champ lumineux de l'hologramme de sortie qui doit être restitué par le SLM pour qu'un observateur Ob visualise correctement la scène reconstruite par l'hologramme d'entrée HE dans le plan de visualisation PV.

On comprend que le fait de regrouper en un seul opérateur linéaire toutes les transformations à appliquer au champ lumineux d'entrée permet de limiter le nombre total de transformées de Fourier à calculer et donc de réduire la complexité du système.

En relation avec les Figures **4A** et **4B**, on décrit maintenant un deuxième exemple de réalisation du procédé de traitement selon l'invention, lorsque le système de restitution holographique SRH est un dispositif destiné à être porté sur la tête d'un utilisateur, de type visiocasque ou lunettes de réalité augmentée. On le désignera par la suite par HMD.

Dans cet exemple, le HMD comprend :

- un module (non représenté) de réception d'un hologramme d'entrée $H_E$, similaire à celui précédemment décrit. Les moyens de connexion au réseau de communication sont ici préférentiellement sans fil;

- un module (non représenté) d'obtention d'une pose $T_{Ob}$, $R_{Ob}$ de l'observateur Ob dans le référentiel RM. Comme déjà évoqué, cette pose s'exprime généralement sous la forme de 6 paramètres représentatifs d'une translation $T_{Ob}$ et d'une rotation $R_{Ob}$ dans le référentiel RM. Elle peut être obtenue avec un dispositif de suivi positionnel, de type IMU (pour « Inertial Measurement Unit », en anglais), connu de l'homme de métier, placé sur le HMD ;

- un dispositif d'affichage de type écran holographique SLM placé dans un plan de sortie $P_S$. Le SLM a les dimensions $Sx_S$, Sys et il est discrétisé en $Nx_S$ x $Ny_S$ pixels. Les valeurs usuelles de $Nx_S$ et $Ny_S$ varient entre 720 et 4096, pour des dimensions $Sx_S$ et Sys de l'ordre du cm. Il est généralement placé sur le côté ou sur le dessus de la tête de l'observateur de façon à être hors de son champ de visualisation ;

- un système de filtrage de type 4F, connu de l'homme de métier, destiné à supprimer des fréquences associées à des directions d'émission d'ordres de diffraction indésirables. Il comprend un module de traitement non linéaire MTNL et deux lentilles minces $L_1$ et $L_2$;

- une lentille de champ $L_C$ destinée à agrandir le champ lumineux émis par le SLM ; et

- un séparateur de faisceaux SF destiné à réorienter le champ lumineux de l'hologramme dans la direction d'un plan de visualisation $P_V$ derrière lequel se positionne l'œil d'un observateur Ob. En effet, le SLM est placé sur le côté ou le dessus de la tête de l'observateur, alors que le plan de visualisation de l'hologramme est situé devant les yeux de l'observateur, comme un verre d'une paire de lunettes. Le plan de visualisation $P_V$ et le plan de sortie $P_S$ ne sont donc pas parallèles. De la sorte, on préserve la possibilité pour l'observateur Ob de voir son environnement réel par transparence en superposition d'une scène 3D $SC_R$ reconstruite par l'hologramme.

L'ensemble HMD / observateur étant mobile dans le repère monde RM, les plans d'entrée $P_E$ et de visualisation PV ne sont cette fois-ci pas nécessairement parallèles entre eux.

En relation avec la figure **4B,** on décompose le trajet de propagation du champ lumineux de l'hologramme d'entrée du plan d'entrée PE au plan de sortie du SLM de la façon suivante :

- une rotation $EO_1$ entre le plan d'entrée $P_E$ et un plan redressé $P_R$ parallèle au plan de visualisation $P_V$ ;

  - une propagation $EO_2$ en espace libre depuis le plan redressé $P_R$ jusqu'au plan de visualisation Pv, de longueur $d_1$ ;

  - une propagation $EO_3$ en espace libre, de longueur $d_2$ depuis le plan de visualisation $P_V$ jusqu'au séparateur de faisceau SF. La traversée du séparateur de faisceau SF est omise car il fait office de miroir ;

  - une propagation $EO_4$ en espace libre depuis le séparateur de faisceau SF jusqu'à la lentille de champ $L_C$, de distance $d_3$ ;

  - une traversée EOs de la lentille de champ Le ;

  - une propagation $EO_6$ en espace libre entre la lentille de champ $L_C$ et la première lentille $L_1$ du système de filtrage 4F, de distance $d_4$ ;

  - une traversée $EO_7$ de la première lentille $L_1$ du système de filtrage 4F ;

  - une propagation $EO_8$ en espace libre entre la première lentille $L_1$ du système de filtrage 4F et le module de traitement non linéaire MTNL, de distance ds;

  - un traitement $EO_9$ de filtrage non linéaire MTNL ;

  - une propagation $EO_{10}$ en espace libre entre le module de traitement non linéaire MTNL et la deuxième lentille $L_2$ du système 4F, de distance de ;

  - une traversée $EO_{11}$ de la deuxième lentille $L_2$ du système 4F ; et

  - une propagation $EO_{12}$ en espace libre entre la deuxième lentille $L_2$ du système de filtrage 4F et le plan de sortie $P_S$ du SLM, de distance $d_7$.

On note respectivement $EO_1$, $EO_2$, $EO_3$, $EO_4$, $EO_5$, $EO_6$, $EO_7$, $EO_8$, $EO_9$, $EO_{10}$, $EO_{11}$ et $EO_{12}$ chacun des éléments optiques ou traitements listés précédemment, et

On note $T_i$ l'opérateur de propagation représentant la traversée de l'élément optique $EO_i$, c'est-à-dire l'opérateur qui associe à un champ lumineux qui arrive en entrée de l'élément optique $EO_i$ le champ lumineux qui en sort. La propagation depuis l'hologramme d'entrée HE jusqu'au SLM sur le plan de sortie HS est donc représenté par l'opérateur :

$$T = T_{12} \ o \ T_{11} \ o \ T_{10} \ o \ T_9 \ o \ ... \ o \ T_1,$$

Où o désigne la composition des opérateurs.

Cette chaîne d'opérateurs est composée d'une partie dite extrinsèque, relative à la propagation directe du champ lumineux, en espace libre entre le plan d'entrée $P_E$ et le plan de visualisation $P_V$ et d'une partie dite intrinsèque, relative à la propagation inverse du champ lumineux, à l'intérieur du système de réalité augmentée SRH. La partie extrinsèque dépend de la position et de l'orientation de l'observateur par rapport au plan d'entrée $P_E$ de l'hologramme $H_E$ et change donc à chaque déplacement de l'observateur Ob, alors que la partie intrinsèque est indépendante de ses mouvements et peut être modélisée une fois pour toutes dans une phase préalable. La partie extrinsèque correspond au traitement par les opérateurs $T_1$ et $T_2$, la partie intrinsèque au traitement par le produit des opérateurs $T_3$ à $T_{12}$.

Dans cet exemple, deux traitements subis par le champ lumineux sur son parcours entre le plan d'entrée $P_E$ et le plan de sortie $P_S$ ne peuvent pas être représentés par une matrice de transfert de rayons. Il s'agit de :

  1) la rotation $EO_1$ du champ lumineux entre le plan d'entrée $P_E$ et un plan redressé $P_R$, parallèle au plan de visualisation $P_V$ correspondant à l'orientation relative entre le système HMD/ observateur et le plan $P_E$ de l'hologramme d'entrée;

  2) le filtrage du champ lumineux par le module de traitement non linéaire MTNL, ce qui correspond à l'élément optique $EO_9$.

On comprend que dans ce deuxième exemple, il n'est pas possible de modéliser la transformation du champ lumineux par un opérateur de type LCT unique, du fait que ces deux traitements non linéaires segmentent la chaîne d'opérateurs de propagation en plusieurs opérateurs de propagation, dont 3 de type LCT.

On décrit maintenant de façon plus détaillée les étapes du procédé de traitement d'un hologramme d'entrée selon l'invention dans cet exemple de réalisation particulier.

En E1, un hologramme HE est reçu.

En E2, on obtient une pose de l'observateur Ob dans le repère Monde RM. Elle est exploitée pour évaluer en E3 si l'hologramme d'entrée est visible par l'observateur Ob. On considère ici que l'observateur est solidaire du système HMD qu'il porte sur sa tête. De ce fait la pose de l'observateur correspond à la pose du système HMD.

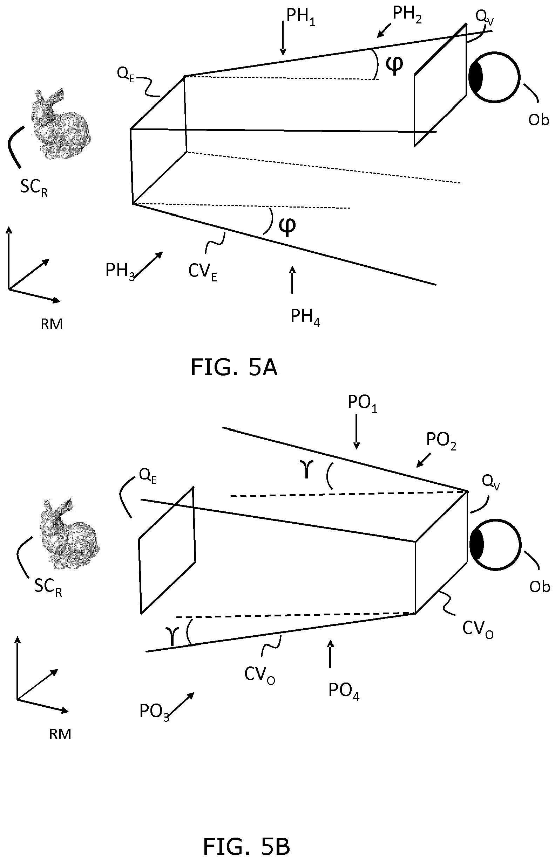

Plus précisément, en relation avec les figures **5A** et **5B,** on considère que l'hologramme est visible par l'observateur Ob si d'une part le quadrilatère $Q_E$ de l'hologramme d'entrée $H_E$ est dans son cône de vision $CV_O$, et si d'autre part l'observateur Ob lui-même se trouve dans le cône d'émission ou de visibilité $CV_E$ de l'hologramme $H_E$, c'est-à-dire à l'intérieur d'un secteur angulaire dans lequel l'hologramme est capable d'émettre un signal lumineux.

Il s'agit en d'autres termes de réaliser un test de visibilité réciproque que l'on peut par exemple calculer de la façon suivante :

On définit quatre plans $PH_1$, $PH_2$, $PH_3$ et $PH_4$ inclinés d'un angle $\varphi$ par rapport au quadrilatère $Q_E$ du plan $P_E$ et respectivement sécants aux quatre bords de $Q_E$. L'angle $\varphi$ peut être choisi comme l'angle de diffraction maximum donné par $\varphi = \arcsin(\lambda/(2Sx_E/Nx_E))$. Il est par exemple de 4.5 degrés pour un hologramme de résolution 72K avec une dimension $Sx_E$ de l'ordre de 30 cm. De même on définit quatre plans $PO_1$, $POz$, $PO_3$ et $PO_4$ inclinés d'un angle $\gamma$ par rapport au quadrilatère $Q_V$, $\gamma$ étant l'angle de vue maximal du système de restitution holographique HMD. Pour les HMD existants, $\gamma$ est de l'ordre de 30 degrés. Le cône de visibilité $CV_E$ est délimité par le quadrilatère $QE$ et les plans $PH_1$, $PH_2$, $PH3$ et $PH_4$, et le cône de vision $CVO$ de l'observateur est délimité par le quadrilatère $Q_V$ et les plans $PO_1$, $POz$, $PO_3$ et $PO_4$. Le plan de l'hologramme $P_E$ et le plan de visualisation $P_V$ sont alors décrétés mutuellement visibles si au moins un des sommets du quadrilatère $Q_E$ est à l'intérieur de $CV_O$, et si l'un des sommets du quadrilatère $Q_V$ définissant $P_V$ est à l'intérieur de $CV_E$. On désigne par coté intérieur d'un plan d'un cône, celui qui est à l'intérieur du cône. Pour cela, on vérifie qu'au moins un sommet en question est situé du côté intérieur de tous les plans définissant le cône concerné.

Si le test de visibilité est positif, alors le procédé continue avec l'étape E4. Sinon, il est stoppé, jusqu'à réception d'une nouvelle pose de l'observateur Ob.

En E4, on obtient les matrices de transfert de rayons $M_{12}$, $M_{11}$, $M_{10}$, $M_8$, $M_7$, $M_6$, $M_5$, $M_4$, $M_3$, $M_2$, $M_{f-1}$ et $M_f$ associées respectivement aux éléments optiques $EO_{12}$ à $EO_{10}$ et $EO_8$ à $EO_2$ précédemment listés.

On calcule en E5 une première matrice de transfert de rayons globale $M_A$ correspondant au trajet du champ lumineux entre la sortie du module de filtrage $EO_9$ et le plan de sortie PS :

$$M_A = M_{12}.M_{11}.M_{10}$$

$\circ$ Avec $M12 = \begin{pmatrix} I & \lambda d_7 I \\ 0 & I \end{pmatrix}$ pour la propagation du champ lumineux en espace libre sur une distance $d_7$. On peut par exemple choisir $d_7 = 2$ cm ;

$\circ$ $M11 = \begin{pmatrix} I & 0 \\ -I/\lambda f_2 & I \end{pmatrix}$ pour la propagation du champ lumineux à travers la lentille mince $L_2$ de focale $f_2$. On peut par exemple placer une lentille de focale $f_2 = 5$ cm ;

$\circ$ $M10 = = \begin{pmatrix} I & \lambda d_6 I \\ 0 & I \end{pmatrix}$ pour la propagation du champ lumineux en espace libre sur une distance $d_6$. On peut par exemple choisir de = 5 cm ;

Et en E6 une deuxième matrice de transfert de rayons globale $M_B$ correspondant au trajet du champ lumineux entre le plan d'entrée redressé $P_R$ et l'entrée du module de filtrage non linéaire $EO_9$ :

$$M_B = M_8 M_7 M_6 M_5 M_4 M_3 M_2 M_{f-1}.$$

$\circ$ Avec $M_8 = \begin{pmatrix} I & \lambda d_5 I \\ 0 & I \end{pmatrix}$ pour la propagation du champ lumineux en espace libre sur une distance $d_5$. On peut par exemple choisir $d_5 = 5$ cm ;

$\circ$ $M_7 = \begin{pmatrix} I & 0 \\ -I/\lambda f_1 & I \end{pmatrix}$ pour la propagation du champ lumineux à travers la lentille mince $L_1$ de focale $f_1$. On peut par exemple placer une lentille de focale $f_1 = 5$ cm ;

○ $M_6 = \begin{pmatrix} I & \lambda d_4 I \\ 0 & I \end{pmatrix}$ pour la propagation du champ lumineux en espace libre sur une distance $d_4$. On peut par exemple choisir $d_4 = 1$ cm ;

○ $M_5 = \begin{pmatrix} I & 0 \\ -I/\lambda f_C & I \end{pmatrix}$ pour la propagation du champ lumineux à travers la lentille de champ $L_C$ de focale $f_C$. On peut par exemple placer une lentille de focale $f_C = 2$ cm ;

○ $M_4 = \begin{pmatrix} I & \lambda d_3 I \\ 0 & I \end{pmatrix}$ pour la propagation du champ lumineux en espace libre sur une distance $d_3$ ; On peut par exemple choisir $d_3 = 1$cm

○ $M_3 = \begin{pmatrix} I & \lambda d_2 I \\ 0 & I \end{pmatrix}$ pour la propagation du champ lumineux en espace libre sur une distance $d_2$ ; On peut par exemple choisir $dz = 1$cm

○ $M_2 = \begin{pmatrix} I & \lambda d_1 I \\ 0 & I \end{pmatrix}$ pour la propagation du champ lumineux en espace libre sur une distance $d_1$ ; $d_1$ est de l'ordre d'une dizaine de centimètres

○ $M_f^{-1}$ qui désigne une transformée de Fourier inverse.

$M_A$ est intrinsèque et donc indépendante des déplacements de l'observateur.

$M_B$ est en partie extrinsèque et intrinsèque et dépend des déplacements de l'observateur, du fait de la matrice $M_2$.

Elle doit être recalculée à chaque déplacement de l'observateur Ob.

On considère un opérateur non linéaire $T_1$ de transformation du champ lumineux par l'élément optique $EO_1$. Il consiste en une rotation de l'orientation du plan d'entrée $P_E$ vers l'orientation du plan de visualisation $P_V$. L'opérateur $T_1$ peut donc se décomposer comme suit :

$$T_1 = U \, o \, T_f,$$

où :

- $T_f$ désigne la transformée de Fourier 2D. C'est un opérateur linéaire;
- $U$ est l'opérateur qui à une fonction $A$ fait correspondre $f \, o \, H$, où $H$ est la fonction qui à deux fréquences spatiales $u$ et $v$ fait correspondre les deux premières composantes du produit suivant :

$$R . \begin{pmatrix} u \\ v \\ \sqrt{\lambda^{-2} - u^2 - v^2} \end{pmatrix},$$

Où $R$ est une matrice de rotation telle que son application au plan $P_E$ le redresse parallèlement au plan de visualisation $P_V$ selon un procédé connu de l'homme du métier.

On considère aussi un opérateur LCT $T_A$ correspondant à la matrice $M_A$ et un opérateur LCT $T_B$ correspondant à la matrice $M_B$, selon la correspondance établie par les équations (1) à (3).

On a $T_A = T_{12} \, o \, T_{11} \, o \, T_{10}$ et $T_B = T_8 \, o \, ... \, T_2 \, o \, T_{f-1}$.

On remarque qu'on peut intégrer ici la transformée de Fourier inverse $T_{f-1}$ à l'opérateur $T_B$, car il s'agit d'une opération linéaire.

On en déduit un opérateur $T$ global de transformation du champ lumineux à l'aide de l'expression suivante:

$$T = T_A \, o \, T_9 \, o \, T_B \, o \, U \, o \, T_f.$$

Par exemple, le filtrage $T_9$ peut être défini comme l'opérateur qui à une fonction $A$ fait correspondre $f.H$ (produit de fonctions), où $H$ est la fonction qui à un couple $(u, v)$ de nombres réels associe 1 si $v > 0$ et 0 sinon.

Par exemple, il s'agit d'un filtrage directionnel bloquant les rayons dirigés vers le haut, $u$ et $v$ représentant les variables de fréquences spatiales du signal lumineux. En variante, on pourrait aussi recourir à un filtre de type passe bande.

En E7, on calcule maintenant l'hologramme de sortie $H_S$ à afficher sur l'écran SLM du plan de sortie pour que l'observateur Ob puisse voir dans le plan de visualisation $P_V$ de son visiocasque HMD la scène 3D $SC_R$ telle que reconstruite par l'hologramme d'entrée dans le plan d'entrée.

Pour ce faire, on transforme les échantillons du champ lumineux de l'hologramme d'entrée en lui appliquant successivement les opérateurs $T_A$, $T_9$, $T_B$, U et $T_f$. En ce qui concerne les opérateurs linéaires, les transformations successives sont réalisées comme dans le premier exemple de réalisation à partir des matrices globales $M_A$ et $M_B$ par application à la pluralité d'échantillons du champ lumineux d'entrée d'une transformée de Fourier discrète selon l'équation (11) précédemment décrite. Le champ lumineux transformé est ré-échantillonné pour obtenir le nombre d'échantillons $f'_{k,l}$ correspondant aux résolutions de sortie $N_{xS}$, $Ny_S$ et dimensions de sortie $Nx_S$,$Ny_S$ de l'hologramme de sortie $H_S$.

Dans une variante de réalisation de l'invention, on considère maintenant le cas où l'observateur Ob porteur du système HMD se déplace dans le référentiel monde RM. On suppose que le système HMD est équipé d'un module d'obtention de la position/orientation de l'observateur porteur du HMD dans le référentiel monde, qui lui permet d'obtenir une mise à jour régulière de cette position/orientation et de détecter un déplacement de l'observateur Ob par rapport au plan de l'hologramme d'entrée $P_E$. Les HMD existants permettent par exemple une mise à jour de cette position/orientation avec une fréquence temporelle de l'ordre de quelques millisecondes. On suppose que le procédé selon l'invention qui vient d'être décrit a été mis en oeuvre à l'instant $t_0$, puis qu'un déplacement de l'observateur Ob a été détecté à un instant $t_1$ par rapport à un instant $t_0$.

Cette détection déclenche la mise à jour de l'opérateur U de rotation du plan d'entrée $P_E$ par rapport au plan de visualisation $P_V$, de la matrice $M_2$ correspondant à la propagation en espace libre d'une distance $d_1(t_1)$, et par conséquent de la matrice globale $M_B$.

Un nouvel opérateur $T_B$ est calculé à partir de la version mise à jour de la matrice globale $M_a(t_1)$ à l'instant $t_1$.

L'agrégation des opérateurs par multiplication des matrices de transfert de rayon diminue le nombre de transformées de Fourier à calculer, ce qui contribue à réduire le temps de calcul global du champ lumineux transformé. En effet, comme expliqué précédemment, l'application de chaque opérateur $T_i$ au champ lumineux complexe de l'hologramme d'entrée $H_E$ se fait en calculant une transformée de Fourier discrète. Grâce à l'invention, le fait de traduire les transformations induites par la traversée d'une pluralité d'éléments optiques à l'aide d'un nombre limité d'opérateurs globaux, réduit d'autant le nombre de transformées de Fourier à appliquer, et de fait la complexité du procédé de traitement.

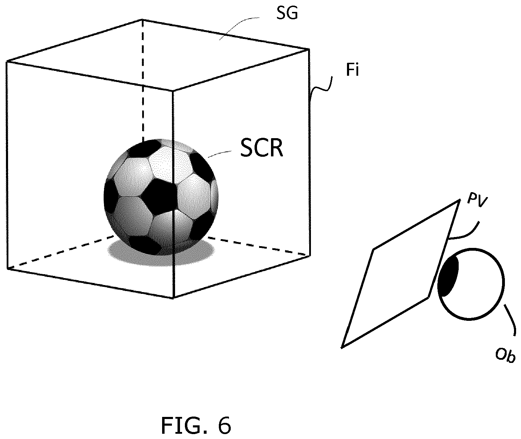

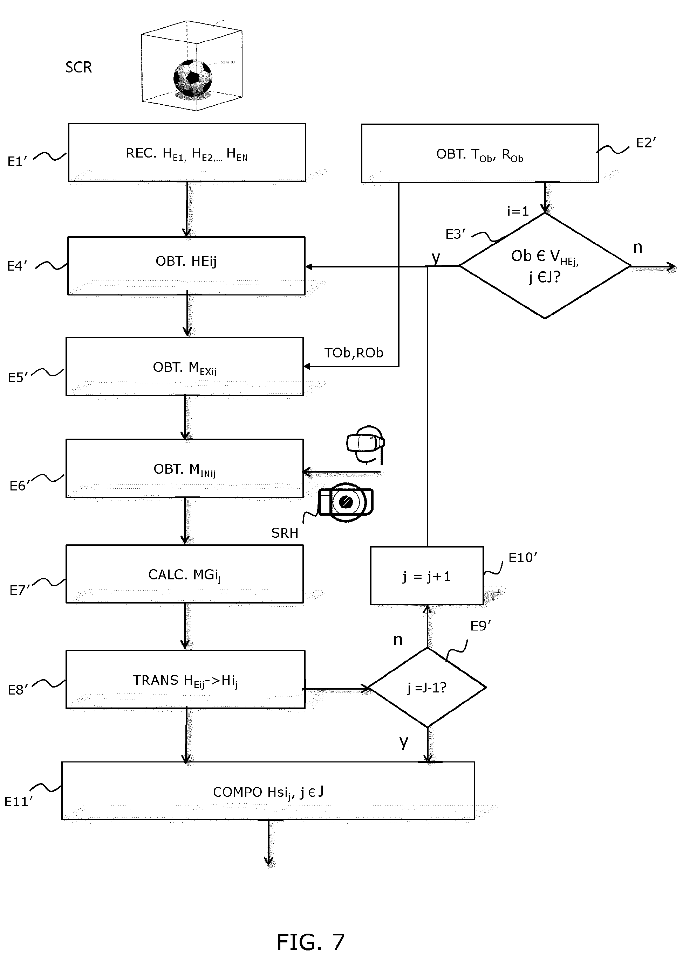

En relation avec les Figures **6** et **7,** on décrit maintenant un troisième exemple de réalisation de l'invention. Dans ce troisième exemple de réalisation, plusieurs hologrammes d'entrée $H_{Ei}$, avec i entier compris entre 1 et N sont reçus, qui sont associés aux plans de faces d'un solide géométrique, tel que par exemple un parallélépipède rectangle. En d'autres termes, on dispose d'autant de scènes reconstruites que de faces du solide, ce qui permet d'offrir à l'observateur une vue de la scène selon une plus large gamme de points de vue.

On comprend que ce troisième mode de réalisation est particulièrement bien adapté à un système de restitution de type HMD, selon lequel l'observateur peut se déplacer autour du plan $P_E$ de l'hologramme d'entrée, et donc visualiser certaines faces du solide géométrique en fonction de sa position/orientation dans le repère monde RM.

Dans l'exemple de la Figure 6, le solide géométrique considéré est un cube et le système de restitution holographique reçoit 6 hologrammes $H_{Ei}$, avec i entier compris entre 1 et I=6, l'hologramme HEi étant associé à une des 6 faces Fi du cube. En relation avec la Figure 7, on décrit maintenant le procédé de traitement de cette pluralité d'hologrammes d'entrée {$H_{Ei}$} selon ce deuxième mode de réalisation de l'invention.

Au cours d'une étape E1', la pluralité d'hologrammes {$H_{Ei}$} est reçue.

En E2', on obtient une pose de l'observateur Ob. En E3', on sélectionne au moins une Face $F_j$ avec j compris entre 1 et N, du cube dont l'observateur est susceptible de visualiser l'hologramme HEj associé. Autrement dit, on recherche s'il existe au moins une face $Fi_j$ pour laquelle le champ de l'hologramme $H_{Ei_j}$ associé est visible par l'observateur Ob. Avantageusement, on réalise le test de visibilité précédemment décrit pour chacune des faces Fi.

Deux cas sont envisagés :

- On sélectionne une seule Face $Fi_j$ visible et seul l'hologramme $HEi_j$ correspondant sera recalculé par le procédé selon l'invention. Cette face sera par exemple la plus proche de l'observateur ou celle qui remplit le mieux le test de visibilité précédemment décrit;
- On sélectionne plusieurs faces $Fi_1$, $Fi_2$...$Fi_J$ avec entier compris entre 1 et I visibles et on recalcule les hologrammes correspondants en vue de composer un hologramme de sortie à partir des hologrammes recalculés. Les contributions de chaque champ sont alors sommées en un hologramme de sortie $H_S$ total.

Dans le premier cas, on suppose qu'on a sélectionné la face $Fi_0$ et on exécute ensuite le procédé de traitement de l'hologramme $H_{Ei_0}$ sélectionné comme décrit en relation avec la Figure 2, ce qui correspond aux étapes E4' à E8' de la Figure **7**.

Dans le second cas, on répète les étapes E4' à E8' pour chacun des hologrammes $H_{Ei_j}$ d'entrée sélectionnés,

tant qu'on n'a pas traité toutes les faces sélectionnées (E9', E10'). Une fois tous les hologrammes de sortie $H_S$ij calculés, on compose en E11' un hologramme de sortie $H_S$ à partir des J hologrammes $H_S$ij.

Avec l'invention, il devient possible pour un observateur porteur d'un système HMD de tourner autour de la scène reconstruite par la pluralité d'hologrammes associés aux faces du solide géométrique.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

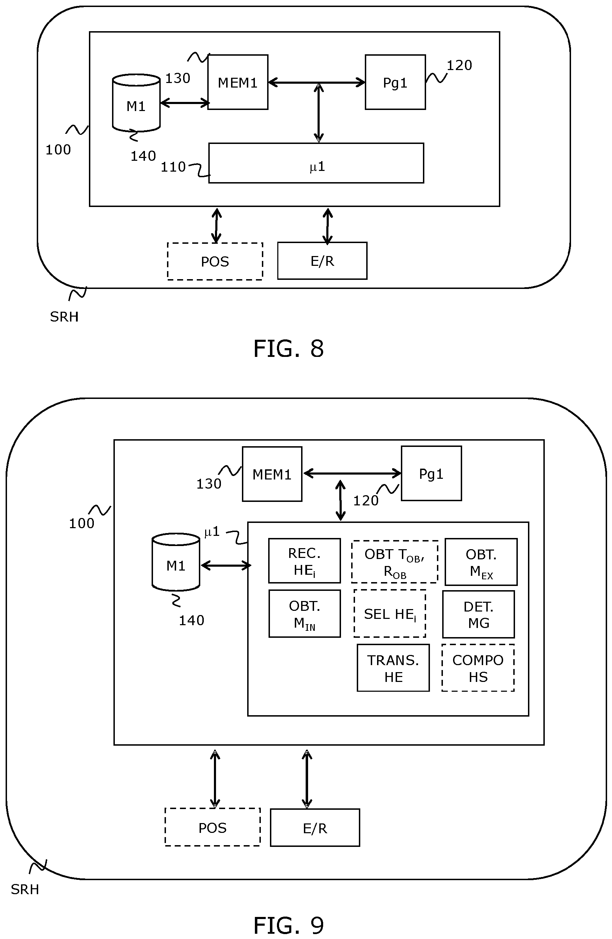

En relation avec les figures **8** et **9**, on présente maintenant la structure simplifiée d'un dispositif de traitement 100 adapté pour mettre en oeuvre le procédé de traitement d'un hologramme d'entrée selon l'un quelconque des modes particuliers de réalisation de l'invention qui viennent d'être décrit en relation avec les figures **2** à **7**.

Le dispositif de traitement est adapté pour traiter au moins un hologramme d'entrée et pour produire un hologramme de sortie.

Le dispositif de traitement 100 est notamment configuré pour:

- Recevoir au moins un hologramme d'entrée et une pose associée dans le repère monde ;
- Obtenir au moins une première matrice, dite matrice géométrique extrinsèque (Me) représentative d'une propagation en espace libre entre le plan de référence et le plan de sortie du système de restitution, ladite matrice étant fonction de la position de référence et de la position de sortie ;

- Obtenir au moins une deuxième matrice, dite matrice géométrique intrinsèque (Mi) représentative d'une propagation entre le plan de sortie et le plan d'entrée du système de restitution à travers au moins undit élément optique ;

- Calculer au moins une matrice $M_G$ globale de transformation géométrique d'un champ lumineux émis par l'hologramme d'entrée entre le plan de référence et le plan d'entrée du système de restitution, par produit d'au moins deux desdites matrices ;

- Transformer l'hologramme d'entrée en l'hologramme de sortie par application d'au moins un opérateur intégral linéaire déterminé à partir de la au moins une matrice calculée, en fonction d'une résolution d'entrée $Nx_E$, $Ny_E$ et de dimensions d'entrée de l'hologramme d'entrée (PE) et de résolutions de sortie $N_{xS}$, $Ny_S$ et dimensions de sortie $Sx_S$, $Sy_S$ de l'écran holographique.

Selon un mode particulier de réalisation de l'invention illustré par la Figure 8, le dispositif de traitement 100 a l'architecture classique d'un ordinateur et comprend notamment, une unité de traitement 110, équipée d'un processeur $\mu_1$, et pilotée par un programme d'ordinateur $Pg_1$ 120, stocké dans une mémoire 130 et mettant en oeuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.

Selon un autre mode particulier de réalisation de l'invention illustré par la Figure 9, le procédé de traitement est mis en oeuvre par des modules fonctionnels. Pour cela, le dispositif de traitement 100 comprend au moins les modules fonctionnels suivants :

- un module REC. de réception d'un ou plusieurs hologrammes d'entrée HE ;

- un module d'obtention OBT. $M_{EX}$ d'au moins une première matrice de transfert de rayons dite extrinsèque, représentative d'une propagation en espace libre entre le plan de référence et le plan de sortie du système de restitution ;

- un module d'obtention OBT. $M_{IN}$ d'au moins une deuxième matrice de transfert de rayons dite intrinsèque représentative d'une propagation entre le plan de sortie et le plan d'entrée du système de restitution à travers au moins undit élément optique ;

- un module de calcul CALC. $M_G$ d'au moins une matrice globale de transfert de rayons d'un champ lumineux émis par l'hologramme d'entrée entre le plan de référence et le plan d'entrée du système de restitution, par produit desdites matrices ; et

- un module de transformation TRANS du champ lumineux de l'hologramme d'entré HE par application d'au moins un opérateur intégral linéaire déterminé à partir de la au moins une matrice calculée, en fonction d'une résolution d'entrée $Nx_E$, $Ny_E$ et de dimensions d'entrée de l'hologramme d'entrée (PE) et d'une résolution de sortie $Nx_S$, $Ny_S$ et dimensions de sortie $Sx_S$, $Sy_S$ de l'écran holographique.

Optionnellement, le dispositif 100 comprend un module d'obtention OBT. $T_{Ob}$, $R_{Ob}$ d'une pose de l'observateur dans le référentiel monde et une unité de sélection SEL $H_j$ d'au moins un hologramme d'entrée, visible par l'observateur.

Selon un mode de réalisation de l'invention, le dispositif 100 comprend un module COMPO de composition de plusieurs hologrammes de sortie obtenus par transformation d'hologrammes d'entrée sélectionnés comme visibles par l'observateur en un seul hologramme de sortie.

Le dispositif 100 comprend en outre un module M1 de stockage des matrices de transfert de rayons calculées par l'invention, ainsi des opérateurs déterminés à partir de ces matrices.

Ces unités sont pilotées par le processeur $\mu 1$ de l'unité de traitement 110.

L'unité de traitement 110 coopère avec les différents modules fonctionnels décrits ci-dessus et la mémoire MEM1 afin de mettre en oeuvre les étapes du procédé de traitement. Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en oeuvre la fonction correspondante au module lorsque les instructions de code sont exécutées par le processeur. Sous une forme matérielle, un tel module fonctionnel peut mis en oeuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour « Application Spécifie Integrated Circuit » en anglais), des circuits FPGA (pour « Field Programmable Gate Arrays » en anglais), un câblage d'unités logiques.

De façon avantageuse, un tel dispositif 100 peut être intégré à un système de restitution holographique SRH. Le dispositif 100 est alors agencé pour coopérer au moins avec le module suivant du système SRH :

- un module E/R d'émission/réception de données, par l'intermédiaire duquel le ou les hologrammes d'entrée HE sont reçus via un réseau de télécommunications, par exemple un réseau filaire ou un réseau sans fil ; et

- le cas échéant, un module de suivi positionnel POS de l'observateur dans le référentiel Monde RM.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de traitement d'au moins un hologramme d'entrée ($H_E$) associé à au moins un plan d'entrée ($P_E$) dans un référentiel monde (RM), en vue d'obtenir un hologramme de sortie ($H_S$) affichable sur un écran holographique (SLM) placé dans un plan dit de sortie ($P_S$) d'un système de restitution (SRH) et visualisable par un observateur (Ob) depuis un plan de visualisation (PV) dudit système, ledit système comprenant au moins un élément optique ($L_C$) agencé entre le plan de visualisation (PV) et le plan de sortie ($P_S$), **caractérisé en ce que** le procédé comprend les étapes suivantes :

   - Obtention (E1) de l'hologramme d'entrée et d'une pose du plan d'entrée associé dans le référentiel monde ;
   - Obtention (E4) d'au moins une première matrice de transfert de rayons, dite matrice extrinsèque ($M_{EX}$), dépendante de la position et de l'orientation de l'observateur et représentative d'une propagation en espace libre entre le plan d'entrée ($P_E$) et le plan de visualisation ($P_V$) du système de restitution ;
   - Obtention (E5) d'au moins une deuxième matrice de transfert de rayons, dite matrice intrinsèque ($M_{IN}$), représentative d'une propagation entre le plan de visualisation et le plan de sortie du système de restitution à travers ledit au moins un élément optique ;
   - Calcul (E6) d'au moins une matrice ($M_G$) globale de transfert de rayons d'un champ lumineux émis par l'hologramme d'entrée entre le plan d'entrée et le plan de sortie du système de restitution, par produit d'au moins deux desdites matrices extrinsèque et intrinsèque ; et
   - Transformation (E7) d'un champ lumineux de l'hologramme d'entrée en un champ lumineux de l'hologramme de sortie par application d'au moins un opérateur intégral linéaire déterminé à partir de la au moins une matrice globale calculée, en fonction de dimensions d'entrée ($Sx_E$, $Sy_E$) et de résolutions d'entrée ($Nx_E$, $Ny_E$) de l'hologramme d'entrée ($H_E$) et de dimensions de sortie ($Sx_S$, $Sy_S$) et de résolutions de sortie ($Nx_S$, $Ny_S$) de l'écran holographique.

**2.** Procédé de traitement selon la revendication **1,** dans lequel, lorsque le système de restitution holographique comprend un module de traitement non linéaire (MTNL) du champ lumineux de l'hologramme d'entrée, l'étape d'obtention (E5) d'au moins une matrice intrinsèque comprend l'obtention d'une première matrice intrinsèque représentative d'une propagation du champ lumineux à travers au moins un élément optique linéaire situé en amont du module de traitement non linéaire et l'obtention d'une deuxième matrice intrinsèque représentative d'une propagation du champ lumineux traité à travers au moins un autre élément optique linéaire situé en aval du module de traitement non linéaire, dans lequel l'étape de calcul (E6) d'au moins une matrice globale comprend le calcul d'une première matrice globale ($M_B$) par produit de la au moins une matrice extrinsèque et de la première matrice intrinsèque et d'une deuxième matrice globale ($M_B$) à partir de la deuxième matrice intrinsèque, et dans lequel l'étape de transformation (E7) du champ lumineux de l'hologramme d'entrée comprend l'application successive d'un premier opérateur linéaire intégral ($T_B$) correspondant à la première matrice globale ($M_B$), d'un opérateur du traitement non linéaire ($T_9$) et d'un deuxième opérateur linéaire intégral ($T_A$) correspondant à la deuxième matrice globale ($M_A$).

**3.** Procédé de traitement selon l'une des revendications précédentes, dans lequel le procédé comprend une étape (E2) d'obtention d'une pose de l'observateur (Ob) dans le référentiel Monde (RM) et une étape (E3) d'évaluation d'une visibilité du au moins un hologramme d'entrée par l'observateur, et dans lequel les étapes d'obtention de matrices de transfert de rayons et de transformation du champ lumineux de l'hologramme d'entrée sont mises en oeuvre, lorsque le au moins un hologramme d'entrée est évalué comme visible par l'observateur.

**4.** Procédé de traitement selon la revendication **3,** dans lequel, suite à une détection (E21) de changement de pose de l'observateur dans le repère monde, le procédé met à jour au moins une matrice extrinsèque et la au moins une matrice globale de transfert de rayonsen fonction dudit changement, et transforme l'hologramme d'entrée par application d'au moins un opérateur intégral linéaire déterminé à partir de la au moins une matrice globale de transfert de rayons mise à jour.

**5.** Procédé de traitement selon l'une des revendications **1** à **4,** dans lequel, lorsque le plan de sortie du système de restitution n'est pas parallèle au plan d'entrée de l'hologramme d'entrée, le procédé comprend une étape d'obtention d'une matrice de rotation (R) du champ lumineux entre le plan d'entrée ($H_E$) et un plan redressé ($P_R$), parallèle au plan de visualisation ($P_V$), et une étape de détermination d'un opérateur non linéaire ($T_1$) de transformation du champ lumineux par composition d'une transformée de Fourier ($T_f$), d'un opérateur fréquentiel de rotation (U) à partir de ladite matrice de rotation (R) et d'une transformée de Fourier inverse ($T_f^{-1}$) et dans lequel l'étape de transformation comprend en outre l'application dudit opérateur non linéaire ($T_1$), préalablement audit au moins un opérateur intégral linéaire (T, $T_A$, $T_B$).

**6.** Procédé de traitement selon la revendication **5** prise dans la dépendance de la revendication 2, dans lequel l'étape de calcul d'une première matrice globale ($M_B$) réalise le produit de la transformée de Fourier inverse, de la matrice extrinsèque et de la première matrice intrinsèque.

**7.** Procédé de traitement selon l'une des revendications précédentes, dans lequel, le champ lumineux de l'hologramme d'entrée comprenant une pluralité d'échantillons fonction des dimensions d'entrée ($Sx_E$, $Sy_E$) et de résolutions d'entrée ($Nx_E$, $Ny_E$), l'étape de transformation du champ lumineux de l'hologramme d'entrée par au moins un opérateur intégral linéaire comprend l'application auxdits échantillons d'une transformée de Fourier discrète et un échantillonnage du champ lumineux transformé en fonction des résolutions de sortie et les dimensions de sortie de l'hologramme de sortie.

**8.** Procédé de traitement selon l'une des revendications précédentes, dans lequel, lorsqu'une pluralité d'hologrammes d'entrée est associée à une pluralité de plans d'entrée formant les faces d'un solide géométrique, le procédé comprend une étape (E3') de sélection des plans d'entrée correspondant à des faces visibles depuis le plan de sortie, dans lequel l'étape d'obtention d'au moins une matrice extrinsèque et l'étape de calcul d'au moins une matrice globale de transfert de rayons sont répétées pour chacun des plans d'entrée sélectionnés, et dans lequel l'étape de transformation transforme les champs des plans de référence sélectionnés et somme les champs transformés pour obtenir l'hologramme de sortie.

**9.** Procédé de traitement selon l'une des revendications précédentes, dans lequel la au moins une matrice extrinsèque obtenue et la au moins une matrice intrinsèque obtenue sont stockées en mémoire.

**10.** Dispositif (100) de traitement d'un hologramme d'entrée associé à un plan d'entrée dans un référentiel monde, en vue d'obtenir un hologramme de sortie affichable sur un écran holographique placé dans un plan dit de sortie d'un système de restitution et visualisable par un observateur depuis un plan de visualisation dudit système, ledit système comprenant au moins un élément optique placé entre le plan de visualisation et le plan de sortie, **caractérisé en ce que** le dispositif comprend un processeur configuré pour, au cours d'une phase préalable :

- Obtenir l'hologramme d'entrée et une pose du plan d'entrée associé dans le référentiel monde ;
- Obtenir au moins une première matrice de transfert de rayons ($M_{EX}$), dite matrice extrinsèque, dépendante de la position et de l'orientation de l'observateur et représentative d'une propagation en espace libre entre le plan d'entrée et le plan de visualisation dudit système ;
- Obtenir au moins une deuxième matrice de transfert de rayons, dite matrice intrinsèque ($M_{IN}$), représentative d'une propagation entre le plan de visualisation et le plan de sortie du système de restitution à travers ledit au moins un élément optique ;
- Calculer au moins une matrice globale de transfert de rayons ($M_G$) d'un champ lumineux émis par l'hologramme d'entrée entre le plan de d'entrée et le plan de sortie du système de restitution, par produit d'au moins deux desdites matrices extrinsèque et intrinsèque ;
- Transformer un champ lumineux de l'hologramme d'entrée en un champ lumineux de l'hologramme de sortie par application d'au moins un opérateur intégral linéaire déterminé à partir de la au moins une matrice globale calculée, discrétisé en fonction de dimensions d'entrée ($Sx_E$, $Sy_E$) et de résolutions d'entrée ($Nx_E, Ny_E$) de l'hologramme d'entrée ($H_E$) et rééchantillonné en fonction de dimensions de sortie ($Sx_S$, $Sy_S$) et de résolutions de sortie ($Nx_S, Ny_S$) de l'écran holographique.

**11.** Système de restitution holographique (SRH) comprenant un dispositif de traitement d'un hologramme d'entrée en un hologramme de sortie selon la revendication **10,** un module d'obtention de l'hologramme d'entrée, le plan de sortie dans lequel est placé l'écran holographique (SLM) destiné à restituer l'hologramme de sortie, le plan de visualisation dans lequel l'hologramme de sortie est destiné à être visualisé par l'observateur, et ledit au moins un élément optique.

**12.** Système de restitution holographique selon la revendication **11, caractérisé en ce qu'**il est de type visiocasque, destiné à être porté sur la tête de l'observateur (Ob) et **en ce que** le plan de visualisation est placé devant les yeux de l'observateur, le plan de sortie est placé en dehors d'un cône de vision de l'observateur, et **en ce qu'**il comprend au moins les éléments optiques suivants :

- un module de réception de l'hologramme d'entrée (HE) comprenant des dimensions d'entrée ($Sx_E$ et $Sy_E$) et des résolutions d'entrée ($Nx_E$ x $Ny_E$);
- un module d'obtention d'une pose de l'observateur (Ob) dans le référentiel Monde (RM);
- l'écran holographique dans le plan de sortie (PS) comprenant des dimensions de sortie ($Sx_S$, $Sy_S$) et des résolutions de sortie ($Nx_S$ x $Ny_S$) ;
- un système de filtrage optique, de type 4F comprenant un module de filtrage non linéaire et deux lentilles minces ;
- une lentille de champ ($L_C$) destinée à agrandir un champ de visualisation du champ lumineux perçu par l'observateur sur le plan de visualisation ($P_V$) ; et
- un séparateur de faisceaux (SF) destiné à réorienter le champ lumineux de l'hologramme dans la direction du plan de visualisation.

**13.** Programme d'ordinateur (Pg1) comportant des instructions pour la mise en oeuvre du procédé de traitement d'un hologramme d'entrée selon l'une quelconque des revendications **1** à **9,** lorsque ledit programme est exécuté par un processeur.

**14.** Support d'enregistrement lisible par un ordinateur, sur lequel est enregistré un programme d'ordinateur comprenant des instructions de code de programme pour l'exécution des étapes du procédé selon l'une des revendications **1** à **9.**

## Patentansprüche

**1.** Verfahren zur Verarbeitung mindestens eines mindestens einer Eingangsebene (PE) zugeordneten Eingangshologramms ($H_E$) in einem Weltbezugssystem (RM), um ein auf einem in einer sogenannten Ausgangsebene (Ps) eines Anzeigesystems (SRH) angeordneten holografischen Schirm (SLM) anzeigbares und von einem Beobachter (Ob) von einer Beobachtungsebene (PV) des Systems aus einsehbares Ausgangshologramm ($H_S$) zu erhalten, wobei das System mindestens ein zwischen der Beobachtungsebene (PV) und der Ausgangsebene (Ps) angeordnetes optisches Element (L$_C$) aufweist, **dadurch gekennzeichnet, daß** das Verfahren die folgenden Schritte aufweist:

- Erhalten (E1) des Eingangshologramms und der Position und Ausrichtung der zugehörigen Eingangsebene im Weltbezugssystem;
- Erhalten (E4) mindestens einer ersten Strahlenübertragungsmatrix, einer sogenannten extrinsischen Matrix (M$_{EX}$), die von der Position und der Orientierung des Beobachters abhängt und für eine Ausbreitung in einem freien Raum zwischen der Eingangsebene (P$_E$) und der Beobachtungsebene (Pv) des Anzeigesystems steht;
- Erhalten (E5) mindestens einer zweiten Strahlenübertragungsmatrix, einer sogenannten intrinsischen Matrix (M$_{IN}$), die für eine Ausbreitung zwischen der Beobachtungsebene und der Ausgangsebene des Anzeigesystems durch das mindestens eine optische Element steht;
- Berechnen (E6) mindestens einer globalen Strahlenübertragungsmatrix (M$_G$) eines vom Eingangshologramm zwischen der Eingangsebene und der Ausgangsebene des Anzeigesystems ausgestrahlten Leuchtfelds durch ein Produkt aus mindestens zwei der besagten extrinsischen und intrinsischen Matrizen; und
- Umwandeln (E7) eines Leuchtfelds des Eingangshologramms in ein Leuchtfeld des Ausgangshologramms durch Anwenden mindestens eines linearen integralen Operators, der in Abhängigkeit von Eingangsgrößen (Sx$_E$, Sy$_E$) und Eingangsauflösungen (Nx$_E$, Ny$_E$) des Eingangshologramms (H$_E$) und von Ausgangsgrößen (Sxs, Sys) und Ausgangsauflösungen (Nxs, Nys) des holografischen Schirms von der mindestens einen berechneten globalen Matrix ausgehend bestimmt wird.

2. Verarbeitungsverfahren gemäß Anspruch 1, bei dem dann, wenn das holografische Anzeigesystem ein Modul (MTNL) für die nichtlineare Verarbeitung des Leuchtfelds des Eingangshologramms aufweist, der Schritt des Erhaltens (E5) mindestens einer intrinsischen Matrix das Erhalten einer ersten intrinsischen Matrix, die für die Ausbreitung des Leuchtfelds durch mindestens ein lineares, strahlaufwärts des Moduls für eine nichtlineare Verarbeitung angeordnetes optisches Element steht, und das Erhalten einer zweiten intrinsischen Matrix, die für die Ausbreitung des Leuchtfelds durch mindestens ein weiteres lineares, strahlabwärts des Moduls für eine nichtlineare Verarbeitung angeordnetes optisches Element steht, aufweist, wobei der Schritt des Berechnens (E6) mindestens einer globalen Matrix das Berechnen einer ersten globalen Matrix (M$_B$) durch ein Produkt aus der mindestens einen extrinsischen Matrix und der ersten intrinsischen Matrix und einer zweiten globalen Matrix (M$_B$) aus der zweiten intrinsischen Matrix aufweist, und bei dem der Schritt der Umwandlung (E7) des Leuchtfelds des Eingangshologramms die aufeinanderfolgende Anwendung eines ersten linearen integralen Operators (T$_B$), der der ersten globalen Matrix (M$_B$) entspricht, eines nichtlinearen Operators (T$_9$) und eines zweiten linearen integralen Operators (T$_A$), der der zweiten globalen Matrix (M$_A$) entspricht, aufweist.

3. Verarbeitungsverfahren gemäß einem der vorangehenden Ansprüche, bei dem das Verfahren einen Schritt (E2) des Erhaltens der Position und Ausrichtung des Beobachters (Ob) im Weltbezugssystem (RM) und einen Schritt (E3) der Bewertung einer Sichtbarkeit des mindestens einen Eingangshologramms durch den Beobachter aufweist, und bei dem die Schritte des Erhaltens der Strahlenübertragungsmatrix und der Umwandlungsmatrix des Leuchtfelds des Eingangshologramms durchgeführt werden, wenn das mindestens eine Eingangshologramm als durch den Beobachter einsehbar bewertet wird.

4. Verarbeitungsverfahren gemäß Anspruch 3, bei dem das Verfahren infolge eines Entdeckens (E21) einer Änderung von Position und Ausrichtung des Beobachters im Weltbezugssystem mindestens eine extrinsische Matrix und die mindestens eine globale Strahlenübertragungsmatrix in Abhängigkeit von der Änderung auf den neuesten Stand bringt und das Eingangshologramm durch Anwenden mindestens eines von der auf den neuesten Stand gebrachten globalen Strahlenübertragungsmatrix linearen integralen Operators umwandelt.

5. Verarbeitungsverfahren gemäß einem der Ansprüche 1 bis 4, bei dem das Verfahren dann, wenn die Ausgangsebene des Anzeigesystems nicht zur Eingangsebene des Eingangshologramms parallel ist, einen Schritt des Erhaltens einer Matrix (R) der Drehung des Leuchtfelds zwischen der Eingangsebene (H$_E$) und einer aufgerichteten, zur Beobachtungsebene (Pv) parallelen Ebene (P$_R$) und einen Schritt des Bestimmens eines nichtlinearen Operators (T$_1$) für die Umwandlung des Leuchtfelds durch Aufstellen einer Fourier-Transformierten (T$_f$), eines Rotationsfrequenzoperators (U) von der Rotationsmatrix (R) ausgehend und einer inversen Fourier-Transformierten (T$_f^{-1}$) aufweist und bei dem der Umwandlungsschritt außerdem das Anwenden des nichtlinearen Operators (T$_1$) vor dem des mindestens einen linearen integralen Operators (T, T$_A$, T$_B$) aufweist.

6. Verarbeitungsverfahren gemäß Anspruch 5 in Abhängigkeit von Anspruch 2, bei dem der Schritt des Berechnens einer ersten globalen Matrix (M$_B$) das Produkt aus der inversen Fourier-Transformierten, der extrinsischen Matrix und der ersten intrinsischen Matrix erstellt.

7. Verarbeitungsverfahren gemäß einem der vorangehenden Ansprüche, bei dem dann, wenn das Leuchtfeld des Eingangshologramms eine Mehrzahl von Proben in Abhängigkeit von Eingangsgrößen ($Sx_E$, $Sy_E$) und Eingangsauflösungen ($Nx_E$, Nys) aufweist, der Schritt des Umwandelns des Leuchtfelds des Eingangshologramms durch mindestens einen linearen integralen Operator das Anwenden einer diskreten Fourier-Transformierten auf die Proben und das Abtasten des transformierten Leuchtfelds in Abhängigkeit von den Ausgangsauflösungen und den Ausgangsabmessungen des Ausgangshologramms aufweist.

8. Verarbeitungsverfahren gemäß einem der vorangehenden Ansprüche, bei dem das Verfahren dann, wenn eine Mehrzahl von Eingangshologrammen einer Mehrzahl von Eingangsebenen zugeordnet sind, die die Seiten eines geometrischen Festkörpers bilden, einen Schritt (E3') des Auswählens der Eingangsebenen, die den von der Ausgangsebene aus sichtbaren Seiten entsprechen, aufweist, wobei der Schritt des Erhaltens mindestens einer extrinsischen Matrix und des Berechnens mindestens einer globalen Strahlenübertragungsmatrix für jede der ausgewählten Eingangsebenen wiederholt wird und wobei der Schritt des Umwandelns die Felder der ausgewählten Bezugsebenen umwandelt und die umgewandelten Felder addiert, um das Ausgangshologramm zu erhalten.

9. Verarbeitungsverfahren gemäß einem der vorangehenden Ansprüche, bei dem die mindestens eine erhaltene extrinsische Matrix und die mindestens eine erhaltene intrinsische Matrix in einem Speicher gespeichert werden.

10. Vorrichtung (100) für die Verarbeitung eines einer Eingangsebene in einem Weltbezugssystem zugeordneten Eingangshologramms, um ein auf einem in einer sogenannten Ausgangsebene (Ps) eines Anzeigesystems (SRH) angeordneten holografischen Bildschirm (SLM) anzeigbares und von einem Beobachter (Ob) von einer Beobachtungsebene (PV) des Systems aus einsehbares Ausgangshologramm ($H_S$) zu erhalten, wobei das System mindestens ein zwischen der Beobachtungsebene (PV) und der Ausgangsebene (Ps) angeordnetes optisches Element ($L_C$) aufweist, **dadurch gekennzeichnet, daß** das Verfahren die folgenden Schritte aufweist:

   - Erhalten (E1) des Eingangshologramms und der Position und Ausrichtung der zugehörigen Eingangsebene im Weltbezugssystem;
   - Erhalten (E4) mindestens einer ersten Strahlenübertragungsmatrix, einer sogenannten extrinsischen Matrix ($M_{EX}$), die von der Position und der Orientierung des Beobachters abhängt und für eine Ausbreitung in einem freien Raum zwischen der Eingangsebene ($P_E$) und der Beobachtungsebene (Pv) des Anzeigesystems steht;
   - Erhalten (E5) mindestens einer zweiten Strahlenübertragungsmatrix, einer sogenannten intrinsischen Matrix ($M_{IN}$), die für eine Ausbreitung zwischen der Beobachtungsebene und der Ausgangsebene des Anzeigesystems durch das mindestens eine optische Element steht;
   - Berechnen (E6) mindestens einer globalen Strahlenübertragungsmatrix ($M_G$) eines vom Eingangshologramm zwischen der Eingangsebene und der Ausgangsebene des Anzeigesystems ausgestrahlten Leuchtfelds durch ein Produkt aus mindestens zwei der besagten extrinsischen und intrinsischen Matrizen; und
   - Umwandeln (E7) eines Leuchtfelds des Eingangshologramms in ein Leuchtfeld des Ausgangshologramms durch Anwenden mindestens eines linearen integralen Operators, der in Abhängigkeit von Eingangsgrößen ($Sx_E$, $Sy_E$) und Eingangsauflösungen ($Nx_E$, $Ny_E$) des Eingangshologramms ($H_E$) und von Ausgangsgrößen (Sxs, Sys) und Ausgangsauflösungen (Nxs, Nys) des holografischen Schirms von der mindestens einen berechneten globalen Matrix ausgehend bestimmt wird.

11. Holografisches Anzeigesystem (SRH) mit einer Vorrichtung für die Verarbeitung eines Eingangshologramms zu einem Ausgangshologramm gemäß Anspruch 10, einem Modul zum Erhalten des Eingangshologramms, der Ausgangsebene, in der der holografische Schirm (SLM) angeordnet ist, der dazu bestimmt ist, das Ausgangshologramm anzuzeigen, der Beobachtungsebene, in der das Ausgangshologramm durch den Beobachter einsehbar sein soll, und mindestens einem optischen Element.

12. Holografisches Anzeigesystem gemäß Anspruch 11, **dadurch gekennzeichnet, daß** es vom Typ einer am Kopf angebrachten Anzeige ist, die dazu bestimmt ist, auf dem Kopf des Beobachters (Ob) getragen zu werden, und daß die Beobachtungsebene vor den Augen des Beobachters angeordnet ist, die Ausgangsebene außerhalb eines Sichtkegels des Beobachters liegt, und daß es mindestens die folgenden optischen Elemente aufweist:

   - ein Modul für den Empfang des Eingangshologramms (HE) mit Eingangsgrößen ($Sx_E$, $Sy_E$) und Eingangsauflösungen ($Nx_E$, Nys);
   - ein Modul zum Erhalten einer Position und Ausrichtung des Beobachters (Ob) im Weltbezugssystem (RM);

- einen holografischen Schirm in der Ausgangsebene (PS) mit Ausgangsgrößen (Sx$_S$, Sys) und Ausgangsauflösungen (Nx$_S$, Ny$_S$) ;
- ein optisches Filtersystem vom Typ F4 mit einem Modul für nichtlineare Filterung und zwei dünnen Linsen;
- eine Feldlinse (L$_C$), die dazu bestimmt ist, ein Sichtfeld des vom Beobachter auf der Sichtebene (P$_V$) wahrgenommenen Leuchtfelds zu vergrößern; und
- einen Strahlenteiler (SF), der dazu bestimmt ist, das Leuchtfeld des Hologramms in die Richtung der Beobachtungsebene umzulenken.

13. Computerprogramm (Pg1) mit Befehlen für die Durchführung des Verfahrens für die Verarbeitung eines Eingangshologramms gemäß einem der Ansprüche 1 bis 9, wenn das Programm durch einen Prozessor ausgeführt wird.

14. Von einem Computer lesbarer Aufzeichnungsträger, auf dem ein Computerprogramm gespeichert ist, das Befehle für die Durchführung der Schritte des Verfahrens gemäß einem der Ansprüche 1 bis 9 aufweist.

**Claims**

1. A method for processing at least one input hologram (H$_E$) associated with at least one input plane (P$_E$) in a World reference frame (RM), in order to obtain an output hologram (H$_S$) displayable on a holographic screen (SLM) placed in a so-called output plane (P$_S$) of a reproduction system (SRH) and viewable by an observer (Ob) from a viewing plane (PV) of said system, said system comprising at least one optical element (L$_C$) arranged between the viewing plane (PV) and the output plane (P$_S$), **characterised in that** the method comprises the following steps:

- obtaining (E1) the input hologram and a pose of the associated input plane in the World reference frame;
- obtaining (E4) at least one first ray transfer matrix, called extrinsic matrix (M$_{EX}$), depending on the position and the direction of the observer and representative of a propagation in free space between the input plane (P$_E$) and the viewing plane (P$_V$) of the reproduction system;
- obtaining (E5) at least one second ray transfer matrix, called intrinsic matrix (M$_{IN}$), representative of a propagation between the viewing plane and the output plane of the reproduction system through said at least one optical element;
- calculating (E6) at least one overall ray transfer matrix (M$_G$) of a light field emitted by the input hologram between the input plane and the output plane of the reproduction system, by a product of at least two of said extrinsic and intrinsic matrices; and
- transforming (E7) a light field of the input hologram into a light field of the output hologram by application of at least one linear integral operator determined from the at least one calculated overall matrix, as a function of input sizes (Sx$_E$, Sy$_E$) and input resolutions (Nx$_E$, Ny$_E$) of the input hologram (H$_E$) and of output sizes (Sx$_S$, Sy$_S$) and output resolutions (Nx$_S$, Ny$_S$) of the holographic screen.

2. The processing method according to claim **1,** wherein, when the holographic reproduction system comprises a module (MTNL) for the non-linear processing of the light field of the input hologram, the step of obtaining (E5) at least one intrinsic matrix comprises obtaining a first intrinsic matrix representative of a propagation of the light field through at least one linear optical element located upstream from the non-linear processing module and obtaining a second intrinsic matrix representative of a propagation of the processed light field through at least one other linear optical element located downstream from the non-linear processing module, wherein the step of calculating (E6) at least one overall matrix comprises calculating a first overall matrix (M$_B$) by a product of the at least one extrinsic matrix and the first intrinsic matrix and a second overall matrix (M$_B$) from the second intrinsic matrix, and wherein the step of transforming (E7) the light field of the input hologram comprises the successive application of a first linear integral operator (T$_B$) corresponding to the first overall matrix (M$_B$), an operator of the non-linear processing (T$_9$) and a second linear integral operator (T$_A$) corresponding to the second overall matrix (M$_A$).

3. The processing method according to one of the preceding claims, wherein the method comprises a step (E2) of obtaining a pose of the observer (Ob) in the World reference frame (RM) and a step (E3) of evaluating a visibility of the at least one input hologram by the observer, and wherein the steps of obtaining ray transfer matrices and transforming the light field of the input hologram are implemented when the at least one input hologram is evaluated as visible by the observer.

4. The processing method according to claim 3, wherein, after detection (E21) of a change of the observer's pose in the World Coordinate System, the method updates at least one extrinsic matrix and the at least one overall ray transfer matrix as a function of said change, and transforms the input hologram by application of at least one linear integral operator determined from the at least one updated overall ray transfer matrix.

5. The processing method according to one of claims **1 to 4,** wherein, when the output plane of the reproduction system is not parallel to the input plane of the input hologram, the method comprises a step of obtaining a matrix (R) of rotation of the light field between the input plane ($H_E$) and a corrected plane ($P_R$), parallel to the viewing plane ($P_V$), and a step of determining a non-linear operator ($T_1$) of transformation of the light field by composition of a Fourier transform ($T_f$), a rotation frequency operator (U) from said rotation matrix (R) and an inverse Fourier transform ($T_f^{-1}$), and wherein the step of transformation further comprises the application of said non-linear operator ($T_1$) previously to said at least one linear integral operator (T, $T_A$, $T_B$).

6. The processing method according to claim **5** taken as dependent upon claim 2, wherein the step of calculating a first overall matrix ($M_B$) implements the product of the inverse Fourier transform, the extrinsic matrix and the first intrinsic matrix.

7. The processing method according to one of the preceding claims, wherein, the light field of the input hologram comprising a plurality of samples as a function of the input sizes ($Sx_E$, $Sy_E$) and input resolutions ($Nx_E$, $Ny_E$), the step of transforming the light field of the input hologram by at least one linear integral operator comprises the application to said samples of a discrete Fourier transform and a sampling of the light field transformed as a function of the output resolutions and output sizes of the output hologram.

8. The processing method according to one of the preceding claims, wherein, when a plurality of input holograms is associated with a plurality of input planes forming the faces of a geometric solid, the method comprises a step (E3') of selecting input planes corresponding to faces visible from the output plane, wherein the step of obtaining at least one extrinsic matrix and the step of calculating at least one overall ray transfer matrix are repeated for each of the selected input planes, and wherein the step of transformation transforms the fields of the selected reference planes and sums the transformed fields to obtain the output hologram.

9. The processing method according to one of the preceding claims, wherein the at least one obtained extrinsic matrix and the at least one obtained intrinsic matrix are stored into a memory.

10. A device (100) for processing an input hologram associated with an input plane in a World reference frame, in order to obtain an output hologram displayable on a holographic screen placed in a plane, called output plane, of a reproduction system and viewable by an observer from a viewing plane of said system, said system comprising at least one optical element placed between the viewing plane and the output plane, **characterized in that** the device comprises a processor configured to, during a preliminary phase:

   - obtain the input hologram and a pose of the associated input plane in the World reference frame;
   - obtain at least one first ray transfer matrix ($M_{EX}$), called extrinsic matrix, depending on the position and the direction of the observer and representative of a propagation in free space between the input plane and the viewing plane of said system;
   - obtain at least one second ray transfer matrix, called intrinsic matrix ($M_{IN}$), representative of a propagation between the viewing plane and the output plane of the reproduction system through said at least one optical element;
   - calculate at least one overall ray transfer matrix ($M_G$) of a light field emitted by the input hologram between the input plane and the output plane of the reproduction system, by a product of at least two of said extrinsic and intrinsic matrices;
   - transform a light field of the input hologram into a light field of the output hologram by application of at least one linear integral operator determined from the at least one calculated overall matrix, discretized as a function of input sizes ($Sx_E$, $Sy_E$) and input resolutions ($Nx_E$, $Ny_E$) of the input hologram ($H_E$) and resampled as a function of output sizes ($Sx_S$, $Sy_S$) and output resolutions ($Nx_S$, $Ny_S$) of the holographic screen.

11. A holographic reproduction system (SRH) comprising a device for processing an input hologram into an output hologram according to claim **10,** a module for obtaining the input hologram, the output plane in which the holographic screen (SLM) intended to reproduce the output hologram is placed, the viewing plane in which the output hologram is intended to be viewed by the observer, and said at least one optical element.

12. The holographic reproduction system according to claim **11, characterized in that** it is of the head-mounted device type, intended to be worn on the head of the observer (Ob), and **in that** the viewing plane is placed in front of the observer's eyes, the output plane is placed out of a vision cone of the observer, and **in that** it comprises at least the following optical elements:

- a module for receiving the input hologram (HE) having input sizes ($Sx_E$ and $Sy_E$) and input resolutions ($Nx_E \times Ny_E$);
- a module for obtaining a pose of the observer (Ob) in the World reference frame (RM);
- the holographic screen in the output plane (PS), having output sizes ($Sx_S$, $Sy_S$) and output resolutions ($Nx_S \times Ny_S$);
- an optical filtering system, of the 4F type, comprising a non-linear filtering module and two thin lenses;
- a field lens ($L_C$) intended to enlarge a viewing field of the light field perceived by the observer on the viewing plane ($P_V$); and
- a beam splitter (SF) intended to redirect the light field of the hologram in the direction of the viewing plane.

13. A computer program (Pg1) including instructions for implementing the method for processing an input hologram according to any one of claims **1** to **9,** when said program is executed by a processor.

14. A recording medium, readable by a computer, on which is recorded a computer program comprising program code instructions for executing the steps of the method according to one of claims **1** to **9.**

FIG. 1

EP 3 785 083 B1

FIG. 2A

FIG. 2B

25

$Ob$

$R_M$

$H_E$

$E2$ — OBT. $T_{Ob}, R_{Ob}$

$E21$ — $Ob \in V_{HE}?$

$E1$ — REC. $H_E$

$E3$ — $Ob \in V_{HE}?$

MEM

$E4$ — OBT. $M_{EX}$

$E5$ — OBT. $M_{IN}$

SRH

$E6$ — CALC. MG

$E7$ — TRANS $H_E -> H_S$

$R_M$

$H_S$

FIG. 3

## FIG. 4A

## FIG. 4B

FIG. 5A

FIG. 5B

FIG. 6

SCR

E1′    REC. $H_{E1}$, $H_{E2,...}$ $H_{EN}$

E2′    OBT. $T_{Ob}$, $R_{Ob}$

i=1

E3′    Ob $\in$ $V_{HEj}$, j $\in$ J?    y    n

E4′    OBT. HEij

TOb,ROb

E5′    OBT. $M_{EXij}$

E6′    OBT. $M_{INij}$

SRH

E7′    CALC. $MGi_j$

E10′    j = j+1

E8′    TRANS $H_{Eij}$->$Hi_j$

E9′    n    j =J-1?    y

E11′    COMPO $Hsi_j$, j $\in$ J

FIG. 7

FIG. 8

FIG. 9

**EP 3 785 083 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* US 2010165429 A1

**Littérature non-brevet citée dans la description**

* **J. J. HEALY et al.** Linear Canonical Transforms - Theory and Applications. Springer-Verlag, 2016, 347-366